(19) **Europäisches Patentamt / European Patent Office / Office européen des brevets**

(11) **EP 1 833 242 B1**

(12) **EUROPEAN PATENT SPECIFICATION**

(45) Date of publication and mention
of the grant of the patent:
**23.02.2011 Bulletin 2011/08**

(21) Application number: **07250859.1**

(22) Date of filing: **01.03.2007**

(51) Int Cl.:
**H04N 5/225** (2006.01)

(54) **Imaging apparatus and electronic device**

Abbildungsvorrichtung und elektronisches Gerät

Appareil d'imagerie et dispositif électronique

(84) Designated Contracting States:
**DE FR GB**

(30) Priority: **06.03.2006 JP 2006060346**
**11.09.2006 JP 2006245080**

(43) Date of publication of application:
**12.09.2007 Bulletin 2007/37**

(73) Proprietor: **Ricoh Company, Ltd.**
**Tokyo 143-8555 (JP)**

(72) Inventors:
• **Muramatsu, Koichi**
**Tokyo 143-8555 (JP)**

• **Ohno, Takehide**
**Tokyo 143-8555 (JP)**

(74) Representative: **Leeming, John Gerard**
**J.A. Kemp & Co.**
**14 South Square**
**Gray's Inn**
**London WC1R 5JJ (GB)**

(56) References cited:
**EP-A- 1 791 350**     **US-A- 4 711 548**
**US-A1- 2001 055 073**

## Description

PRIORITY CLAIM

This application claims priority from Japanese Patent Application No. 2006-060346, filed with the Japanese Patent Office on March 6, 2006, and Japanese Patent Application No. 2006-245080, filed with the Japanese Patent Office on September 11, 2006.

Field of the Invention

The present invention relates to an imaging apparatus that forms an image of a subject by focusing an optical image of the subject on an image sensor, and particularly to an imaging apparatus that includes an image blur suppression function for suppressing image blur by making an image sensor follow the movement of an optical image of a subject causing the image blur.

Description of the Related Art

At present, an imaging apparatus such as a digital camera is known that has what is called an image blur suppression function. The imaging apparatus is, for example, described in Japanese Patent Publication No. 2004-274242, in which a mounting stage, integrally mounted to a case of a body, is provided at one end of a fixed barrel for accommodating a lens barrel on an optical axis. The mounting stage includes a CCD (charge-coupled device) solid state imaging element as an image sensor. The mounting stage is held on a guide stage, which, in turn, enables the mounting stage to move along an X-Y plane perpendicular to a Z axis of an optical axis. The guide stage is fixed with regard to the optical axis in the case of the body, while the mounting stage is driven by a magnetic force that a permanent magnet on the guide stage and a coil placed opposite to the permanent magnet form.

According to the conventional imaging apparatus, a processing circuit containing an arithmetic processing circuit in the case of the body detects a slope in the X and Y directions produced in the body. Based on the detected output, by varying a conducting current through the driving coil, a CCD solid state image sensing device is controlled to follow the movement of an optical image of the subject causing an image blur. At this time, a flexible print distribution board (may be also called simply "flexible board"), which can transform flexibly, is used to connect between the CCD solid state image sensing device and the processing circuit for controlling the CCD solid state image sensing device and for processing signals from the CCD solid state image sensing device. This prevents movement control performance of the CCD solid state image sensing device from deteriorating.

That is, when the CCD solid state image sensing device moves, the flexible board absorbs a reactive force produced by the processing circuit on a fixed side, making use of the flexibility thereof, by which the movement of the CCD solid state image sensing device is prevented from being interfered with by the fixed side. and the control is prevented from being disturbed.

However, the flexible board, which connects the image sensor such as a CCD solid state image sensing device and the processing circuit, in the conventional imaging apparatus has a drawback in that performance is unstable. The reason for this is that the relative relationship of mounting positions and the shape of the flexible board related thereto varies when mounting a parts unit containing the CCD solid state image sensing device on one end of the flexible board, and a parts unit including the processing circuit on the other end.

That is, the flexible board can effectively absorb a reactive force by flexible bending in a vertical direction to the surface of a connector usually formed in a form of a belt. With regard to the direction parallel to the surface, when a reactive force parallel to the surface of the flexible board works, the reactive force cannot be fully absorbed because of insufficient flexibility and function similar to a rigid body. On account of this, directionality exists in absorbing a reactive force. Owing to the variation of the positional relationship in the case of mounting, movement control of the CCD solid state imaging device is prevented by the flexible board.

Accordingly, there is a need for an imaging apparatus and an electronic device having the imaging apparatus that can improve control performance, so that a variation of the mounting position between the two units connected by the flexible board does not bring about a change in performance before and after mounting.

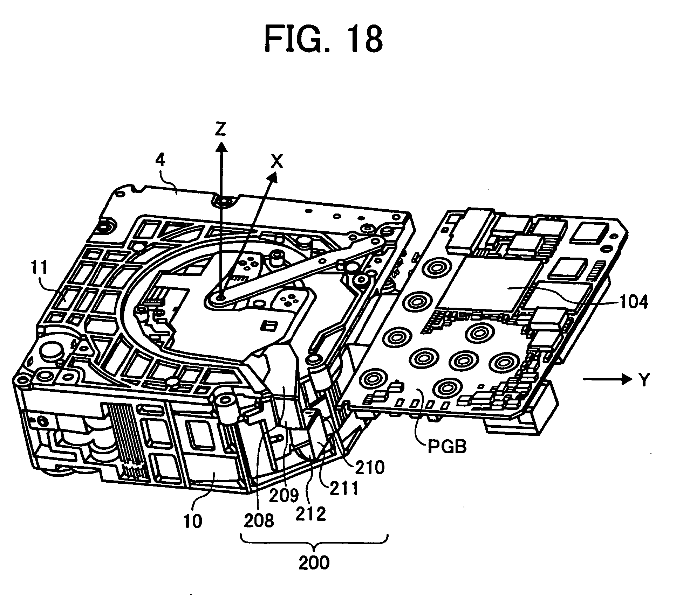

EP1791350 A2 which is state of the art according to Article 54(3) EPC discloses an imagine apparatus having a flexible circuit board for connecting the image sensor with a processing circuit. The flexible circuit board has extensions (see figures 18A-C) in the direction of the optical axis and parallel to the image sensor plane.

The present invention is directed to an imaging apparatus that satisfies this need. According to the present invention, there is provided an imaging apparatus as specified in the claims and an electronic device including such an imaging apparatus.

These and other features, aspects, and advantages of the present invention will become better understood with regard to the following description of exemplary embodiments, appended claims, and accompanying drawings, in which:

FIG.1 is a front view of a digital camera according to a first embodiment of the present invention.

FIG.2 is a back view of the digital camera presented in FIG.1.

FIG.3 is a plan view of the digital camera presented in FIG.1.

FIG.4 is a block diagram illustrating a schematic system circuit structure of the digital camera presented in FIG 1.

FIG.5 is a flow chart explaining a general operation of the digital camera according to embodiments of the present invention.

FIG.6A is a view explaining a principle for suppressing an image blur of the digital camera according to embodiments of the present invention, presenting an inclination of the digital camera.

FIG.6B is a partly enlarged view presenting a relationship between a photographing lens and an imaging surface of a CCD of the digital camera.

FIG.7 is a front view of a fixation barrel of a lens barrel of the digital camera presented in FIG.1.

FIG.8 is a longitudinal sectional view of the fixation barrel illustrated in FIG.7.

FIG.9A is a back view of the fixation barrel illustrated in FIG.7, presenting a stage where a flexible board is not attached.

FIG.9B is a back view of the fixation barrel illustrated in FIG.7, presenting a state where the flexible board is attached.

FIG.10 depicts an exploded perspective view of a CCD stage according to the digital camera presented in FIG.1.

FIG.11 depicts a partly enlarged sectional view along a II-II line in FIG.9B.

FIG.12A is an explanatory view illustrating a major portion of an original point forced retention mechanism according to the digital camera presented in FIG.1, and is a perspective view illustrating the connection relationship among the CCD stage, a stepping motor and a conversion mechanism.

FIG.12B is a perspective view illustrating a partly enlarged conversion mechanism.

FIG.13A is a view showing a frame format of a cam groove of a rotation transferring gear according to the digital camera presented in FIG.1, presenting a bottom plane view of the rotation transferring gear.

FIG.13B is a view showing a frame format of a cam groove of a rotation transferring gear according to the digital camera presented in FIG.1, illustrating a cross-section obtained along a circulated one-point dotted line V presented in FIG.13A.

FIG.13C is a view showing a frame format of a cam groove of a rotation transferring gear according to the digital camera presented in FIG.1, illustrating a state where a cam pin slides an inclined surface portion of the cam groove, and the rotation transferring gear is pushed up toward a base member.

FIG.13D is a view showing a frame format of a cam groove of a rotation transferring gear according to the digital camera presented in FIG.1, illustrating a state where the cam pin has contact with a flat top portion of the cam groove, and the rotation transferring gear is pushed up to the maximum.

FIG.13E is a view showing a frame format of a cam groove of a rotation transferring gear according to the digital camera presented in FIG.1, illustrating a state where the cam pin passes through a cliff to have contact with a flat valley portion, and the transferring gear is pushed up to the maximum.

FIG.14A is an explanatory view for explaining a state where a retainer pin presented in FIG.12A is fitted to a concave peripheral wall, illustrating a partly enlarged cross- sectional view presenting a state where the retainer pin is closely fitted to a circumference wall of the concave peripheral wall.

FIG.14B is an explanation view for explaining a state where a retainer pin presented in FIG.12A is fitted to a concave portion, illustrating a partly enlarged cross sectional view presenting a state where the retainer pin is separated from the circumference wall of the concave portion.

FIG.15 is a view illustrating the flexible board before being bent according to the digital camera presented in FIG.1.

FIG.16 is a view explaining how to bend the flexible board presented in FIG.15.

FIG.17 is a view explaining a state where a extension connection portion of the flexible board presented in FIG.15 is overlapped and bent.

FIG.18 is a perspective view presenting a location relationship among a fixation barrel portion, the flexible board and a printed board.

FIG.19 is a perspective view illustrating an enlarged bent portion presented in FIG.8.

FIG.20 is a sectional view presenting a location relationship among the fixation barrel portion, the flexible board and the printed board.

FIG.21 is a perspective view explaining problems in assembling among the fixation barrel portion, the flexible board and the printed board.

FIG.22 is a perspective view illustrating in detail a part of the fixation barrel, where the extension connection portion of the flexible board is mounted.

FIG.23 is a perspective view illustrating in detail the extension connection portion of the flexible board in a bent state.

FIG.24 is a perspective view presenting a location relationship among the fixation barrel portion, the flexible board and the printed board according to a second embodiment of the present invention.

FIG.25 depicts a block diagram of an original point forced retention control circuit according to the embodiments of the present invention.

FIG.26 is a flow chart illustrating one example of a control process of the original point forced retention mechanism of a mechanism for suppressing an image blur according to the embodiments of the present invention.

FIG.27 depicts a circuit diagram presenting one example of a camera shake detection circuit according to the embodiments of the present invention.

FIG.28 depicts a block diagram of a control circuit for suppressing an image blur according to the embodiments of the present invention.

FIG.29 is a flow chart presenting one example of a variation correction setting process according to the embodiments of the present invention.

FIG.30 is a flow chart presenting one example of a process of the control circuit for suppressing an image blur according to the embodiment of the present invention.

FIG.31 is a block diagram illustrating a modification example of a feedback circuit presented in FIG.28.

FIG.32 is a flow chart illustrating a flow of a process for suppressing an image blur of an imaging apparatus according to the embodiments of the present invention.

FIG.33 is a timing chart illustrating one example of the process for suppressing an image blur in the case of a full-pressing of the imaging apparatus according to the embodiments of the present invention.

FIG.34 is a timing chart illustrating one example of a release process of the process for suppressing an image blur of the imaging apparatus according to the embodiments of the present invention.

FIG.35 is a timing chart illustrating one example of the process for suppressing an image blur in the case of a full-pressing at one shot of the imaging apparatus according to the embodiments of the present invention.

FIG.36 is a perspective view presenting a location relationship among the fixation barrel portion, the flexible board and the printed board according to a third embodiment of the present invention.

FIG.37 is a sectional view presenting a location relationship among the fixation barrel portion, the flexible board and the printed board presented in FIG.36.

FIG.38 is a perspective view illustrating a form in detail of the flexible board presented in FIG.36.

FIG.39 is a perspective view illustrating in detail a form of the extension connection portion of the flexible board in the bent state presented in FIG.36.

FIG.40 is a perspective view presenting a location relationship among the fixation barrel portion, the flexible board and the printed board according to a fourth embodiment of the present invention.

FIG.41 is a perspective view presenting the flexible board according to a fifth embodiment of the present invention.

FIG.42 is a perspective view presenting the flexible board according to a sixth embodiment of the present invention.

Hereinafter, an imaging apparatus according to the present invention will be explained in detail based on embodiments of the present invention with reference to the accompanying drawings.

(General Structure of a Digital Camera)

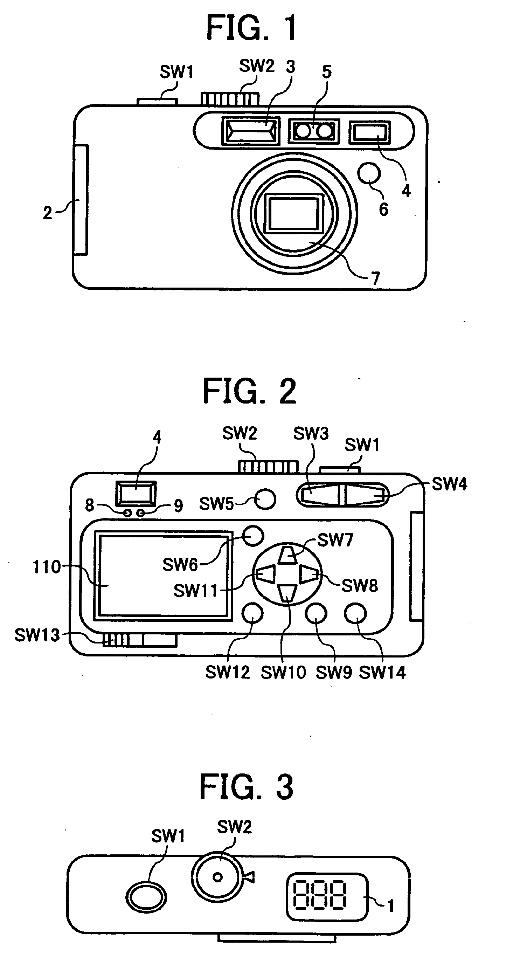

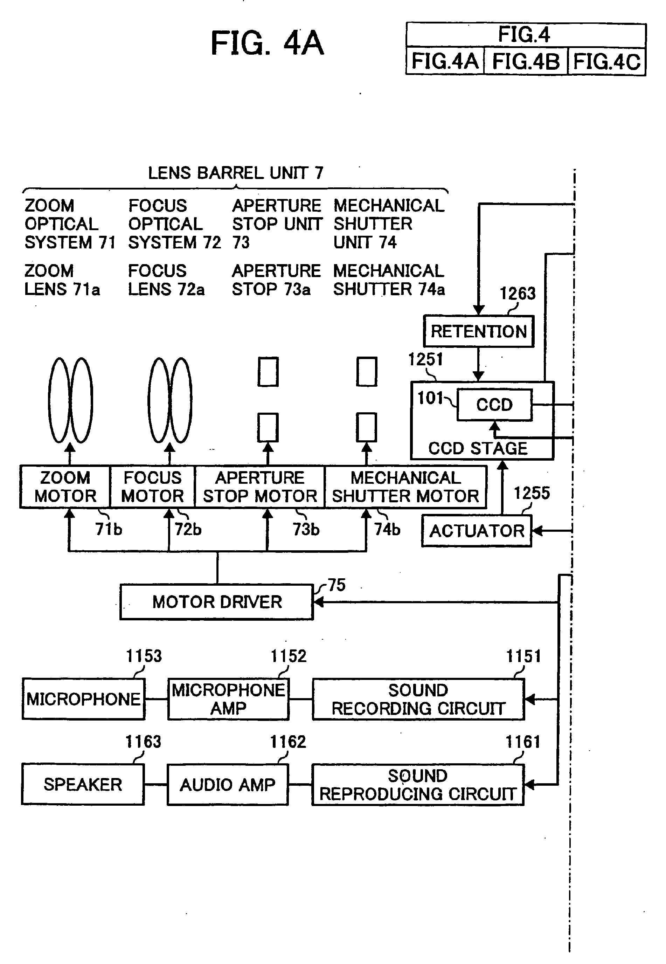

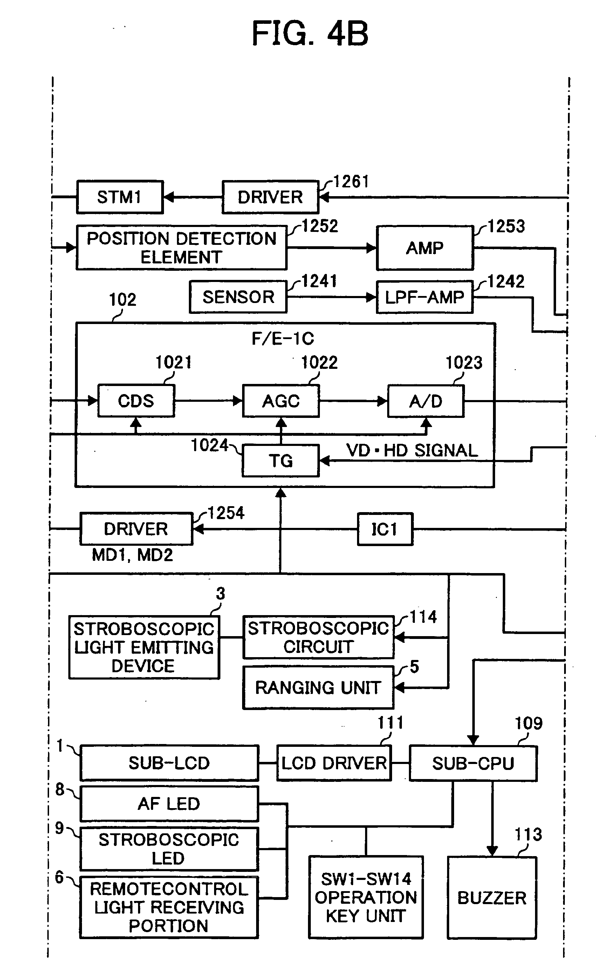

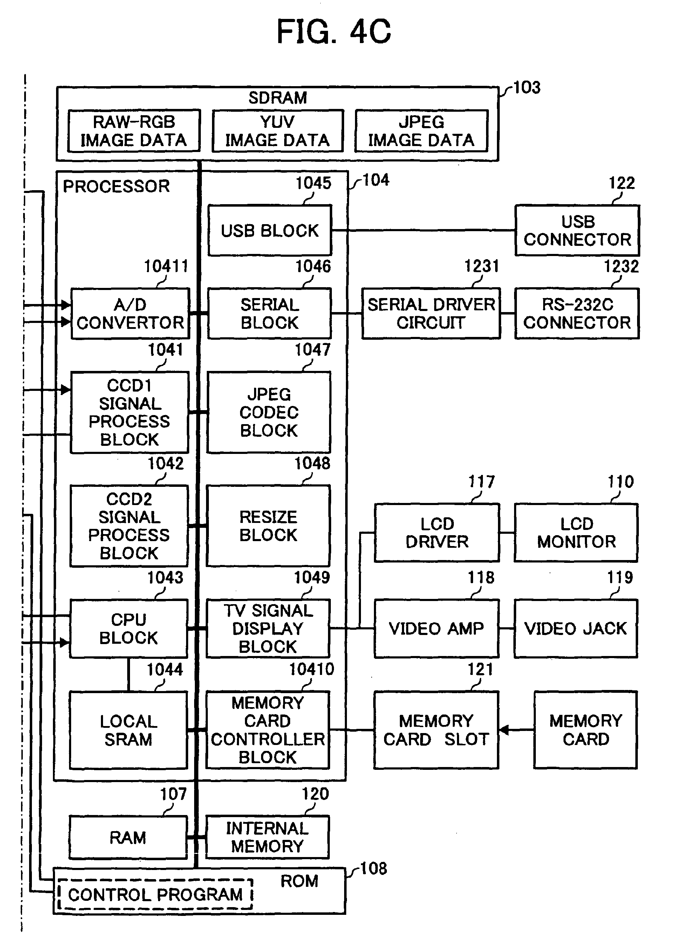

FIGS. 1 to 4 show a structure of a digital camera having a function for suppressing an image blur according to the imaging apparatus of a first embodiment of the present invention. FIG.1 is a front view of the digital camera, FIG.2 is a back view of the digital camera presented in FIG.1, FIG.3 is a plan view of the digital camera presented in FIG.1, and FIG.4 is a block diagram illustrating a schematic system structure of the digital camera presented in FIG.1.

In FIGS. 1 to 3, a camera body has a top plane provided with a release switch (a release shutter) SW1, a mode dial SW2, and a sub LCD (liquid crystal display) 1.

The camera body has a front plane provided with a stroboscopic light-emitting section 3, a ranging unit 5, and a remote control light-receiving section 6. An optical finder 4 has an object plane positioned at the front plane of the camera body. A barrel unit 7 has an object plane provided toward the front plane of the camera body. The barrel unit 7 includes a photographing lens.

The camera body has a back plane provided with a power switch SW13, an LCD monitor 110, an AF (automatic focus)-LED (light-emitting diode) 8, a stroboscopic LED 9, a wide-angle zoom switch SW3, a telephoto zoom switch SW4, a self-timer switch SW5, a menu switch SW6, an up/stroboscopic switch, a right switch SW8, a display switch SW9, a down/macro-switch SW10, a left/image confirmation switch SW11, an OK switch SW12, and a switch for suppressing an image blur SW14. The optical finder 4 has a main part contained in the camera body and an ocular plane disposed on the back plane of the camera body.

The camera body has a side plane provided with a lid 2 of a memory card/battery loading space.

Since general operations of each portion described above are well-known, detailed descriptions are omitted. Next, the system structure of the digital camera in a processing circuit contained in the camera body will be explained.

Referring to FIG.4, a processor 104 as a processing unit of the processing circuit executes various processes of the digital camera. The processor 104 comprises an A/D (analogue/digital) converter 10411, a first CCD signal processing block 1041, a second CCD signal processing block 1042, a CPU (central processing unit) block 1043, a local SRAM (static random access memory) 1044, a USB (universal serial bus) block 1045, a serial block 1046, a JPEG/CODEC block 1047, a resizing block 1048, a TV signal display block 1049, and a memory card controller block 10410. Each of the blocks is connected to each other via a bus line.

An SDRAM (a synchronous dynamic random access memory) 103 is connected to the processor 104 via a bus line. Stored in the SDRAM 103 are RAW-RGB image data, which is raw data of RGB processed only by white balance and γ processing, YUV image data, which are image data converted into luminance data and color difference data, and image data such as JPEG image data, which are compressed by the JPEG method.

Connected to the processor 104 via a bus line are a RAM (random access memory) 107, an internal memory 120, and a ROM (read only memory) 108. The internal memory 120 is a memory which stores photographed image data when a memory card MC is not installed in a memory card slot 121. A control program, parameter, etc., are stored in the ROM 108. The control program is loaded in a main memory of the processor 104 (for example, the RAM 107, the local SRAM 1044, or a memory embedded in the CPU block 1043), when the power switch SW13 is turned on, to allow the processor 104 to control operation of each section according to the control program. Control data, parameters, etc., are stored temporarily in the RAM 107 or the like with the control.

The barrel unit 7 comprises a lens barrel containing a zoom optical system 71 having a zoom lens 71 a, a focus optical system 72 having a focus lens 72a, an aperture stop unit 73 having an aperture stop 73a, and a mechanical shutter unit 74 having a mechanical shutter 74a.

The zoom optical system 71, the focus optical system 72, the aperture stop unit 73, and the mechanical shutter unit 74 are driven by a zoom motor 71b, a focus motor 72b, an aperture stop motor 73b, and a mechanical shutter motor 74b, respectively. Each of these motors is driven by a motor driver 75, and the motor driver 75 is controlled by the CPU block 1043 of the processor 104.

A subject image is imaged onto a CCD solid-state image sensing device 101 by each of the lens systems of the barrel unit 7, and the CCD solid-state image sensing device 101 converts the subject image into an image signal to output the image signal to an F/E-IC (front-end integrated circuit) 102. The F/E-IC 102 is configured to comprise a CDS (correlated double sampling) 1021 which performs a correlated double sampling for eliminating image noise, an AGC (automatic gain control) 1022 for gain adjustment, and an A/D converter 1023 which conducts an analogue/digital conversion. More particularly, the F/E-IC 102 conducts a predetermined process to the image signal to convert an analogue image signal to a digital signal, and outputs the digital signal to the first CCD signal processing block 1041 of the processor 104. These signal control processes are performed via a TG (timing generator) 1024 by a vertical synchronization signal VD and a horizontal synchronization signal HD which are output from the first CCD signal processing block 1041 of processor 104. The TG 1024 generates a driving timing signal based on the vertical synchronization signal VD and the horizontal synchronization signal HD.

The first CCD signal processing block 1041 performs a white balance setting or a γ processing setting to the digital image input from the CCD solid-state image sensing device 101 via the F/E-IC 102, and also outputs the vertical synchronization signal VD and the horizontal synchronization signal HD. The second CCD signal processing block 1042 performs a conversion to luminance data and color difference data by a filtering process. The CPU block 1043 of the processor 104 controls operation of each section of the digital camera such as that of the motor driver 75, the CCD solid-state image sensing device 101, and the like, based on the signals input from the remote control light receiving section 6 or an operation unit having the operation switches SW1-SW14 according to the control program stored in the ROM 108. The local SRAM 1044 temporarily stores data required for a control of the CPU block 1043 and the like. The USB block 1045 performs a process for communicating by using an external device such as PC or the like and a USB interface. The serial block 1046 performs a process for serial communications with the external device such as the PC or the like. The JPEG/CODEC block 1047 performs a compression and an extension by the JPEG method. The resizing block 1048 performs a process for scaling a size of the image data by an interpolating process or the like. The TV signal display block 1049 converts an image data to a video signal for displaying on an external display device such as a liquid crystal monitor 110, TV, or the like. The memory card controller block 10410 controls a memory card MC in which photographed image data is stored.

The CPU block 1043 of the processor 104 is configured to control a voice recording operation by a voice recording circuit 1151. The voice recording circuit 1151 records a voice signal which is detected by a microphone 1153, converted into an electrical signal, and then amplified by a microphone amplifier 1152 according to a command. The CPU block 1043 controls operation of a sound reproducing circuit 1161. The sound reproducing circuit 1161 amplifies the voice signal appropriately stored in a memory by an amplifier 1162 and reproduces by a speaker 1163 according to a command. The CPU block 1043 controls a stroboscopic circuit 114 so as to flash illumination light from the stroboscopic light-emitting section 3. The CPU block 1043 also controls the ranging unit 5 so as to measure a subject distance.

The CPU block 1043 is connected to a sub CPU 109. The sub CPU 109 controls the display by the sub LCD 1 via an LCD driver 111. The sub CPU 109 is also connected to the AF-LED 8, the stroboscopic LED 9, the remote control light-receiving section 6, an operation key unit having the operation switches SW1-SW14, and a buzzer 113.

The USB block 1045 is connected to a USB connector 122. The serial block 1046 is connected to an RS-232C connector 1232 via a serial driving circuit 1231. The TV signal display block 1049 is connected to the LCD monitor 110 through an LCD driver 117, and also connected to a video jack 119 which connects the camera to the external display device such as TV, via a video amplifier 118 which converts a video signal output from the TV signal display block 1049 into a video output, for example, of 75 Ω impedance. The memory card controller block 10410 is connected to the memory card slot 121, and controls a read/write of the memory card MC installed on the memory card slot 121.

The LCD driver 117 converts the video signal output from the TV signal display block 1049 into a signal for displaying onto the LCD monitor 110 to drive the LCD monitor 110 and display. The LCD monitor 110 is used for monitoring a subject's condition before photographing, confirming a photographed image and displaying image data recorded in a memory card or an internal memory.

The digital camera has the body provided with a fixation barrel (described later) comprising a part of the barrel unit 7. The fixation barrel is provided with a CCD stage 1251 capable of moving in X-Y directions. The CCD solid-state image sensing device 101 is installed in the CCD stage 1251 comprising a part of the mechanism for suppressing an image blur. The details of the mechanical structure of the CCD stage 1251 will be described later.

The CCD stage 1251 is driven by an actuator 1255, and the driving of the actuator 1255 is controlled by a driver 1254. The driver 1254 comprises a coil drive MD1 and a coil drive MD2. The driver 1254 is connected to an A/D (analogue/digital) converter IC1 which is connected to the ROM 108. The control data is input to the A/D converter IC1 from the ROM 108.

The fixation barrel is provided with an original point forced retention mechanism 1263 which retains the CCD stage 1251 at a central position when the suppression switch SW14 is powered off and the power switch SW13 is powered off. The original point forced retention mechanism 1263 is controlled by a stepping motor STM1 as an actuator which is driven by a driver 1261. The control data is input to the driver 1261 from the ROM 108.

The CCD stage 1251 is provided with a position detection element 1252. A detection output of the position detection element 1252 is input to an operational amplifier 1253 to be amplified, and then input to the A/D converter 10411. The camera body is provided with a gyro sensor 1241, which can detect a rotation of the camera in the X direction and Y direction. The detection output of the gyro sensor 1241 is input to the A/D converter 10411 via an LPF amplifier 1242 which has a function as a low-pass filter.

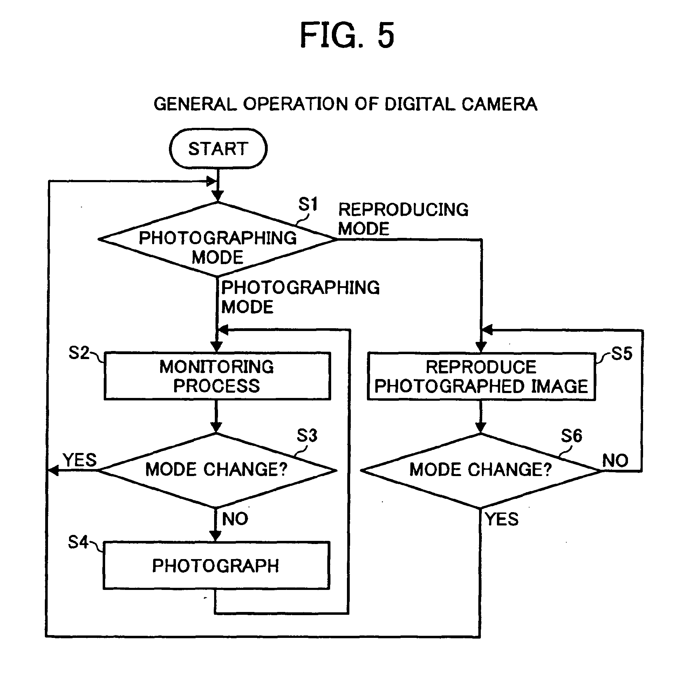

Next, a general operation of a digital camera according to the embodiment will be schematically explained with reference to FIG.5.

If the mode dial SW2 is set to a photographing mode, the camera is activated with the photographing mode. Also if the mode dial SW2 is set to a reproducing mode, the camera is activated with the reproducing mode. The processor 104 determines whether a switch condition of the mode dial SW2 is the photographing mode or the reproducing mode (S 1).

The processor 104 controls the motor driver 75 to move the lens barrel of the barrel unit 7 to a photographable position. Moreover, the processor 104 powers on each of the circuits of the CCD solid-state image sensing device 101, the F/E-IC 102, the LCD monitor 110, and the like to start the operation. If each of the circuits is powered on, the operation of the photographing mode is initiated.

In the photographing mode, the light that has entered into the CCD solid-state image sensing device 101 as an image pick-up device through each of lens systems is photo-electrically converted to be sent to the CDS circuit 1021 and the A/D converter 1023 as analogue signals of R, G, B. The A/D converter 1023 converts the input analogue signals into the digital signals. The digital signals are converted into the YUV image data by a YUV (luminance and color difference signals) conversion function of the second CCD signal processing block 1042 in the processor 104 and written into the SDRAM 103 as a frame memory.

The YUV signal is read by the CPU block 1043 of the processor 104 and sent to the external display device such as the TV or the LCD monitor 110 via the TV signal display block 1049 to display the photographed image. This process, which is performed at intervals of 1/30 seconds, provides an electronic finder display renewed at every 1/30 seconds in the photographing mode. Namely, a monitoring process is carried out (S2). Next, it is determined whether or not a setting of the mode dial SW2 has been changed (S3). If the setting of the mode dial SW2 is not changed, a photographing process is carried out according to the operation of the release switch SW1 (S4).

In the reproducing mode, the processor 104 displays the photographed image onto the LCD monitor 110 (S5). Then, the processor 104 determines whether or not the setting of mode dial SW2 has been changed (S6). If the setting of mode dial SW2 has been changed, a flow moves to S1. If the setting of mode dial SW2 has been unchanged, the process of S5 is repeated.

(Principle of Image Blur Suppression)

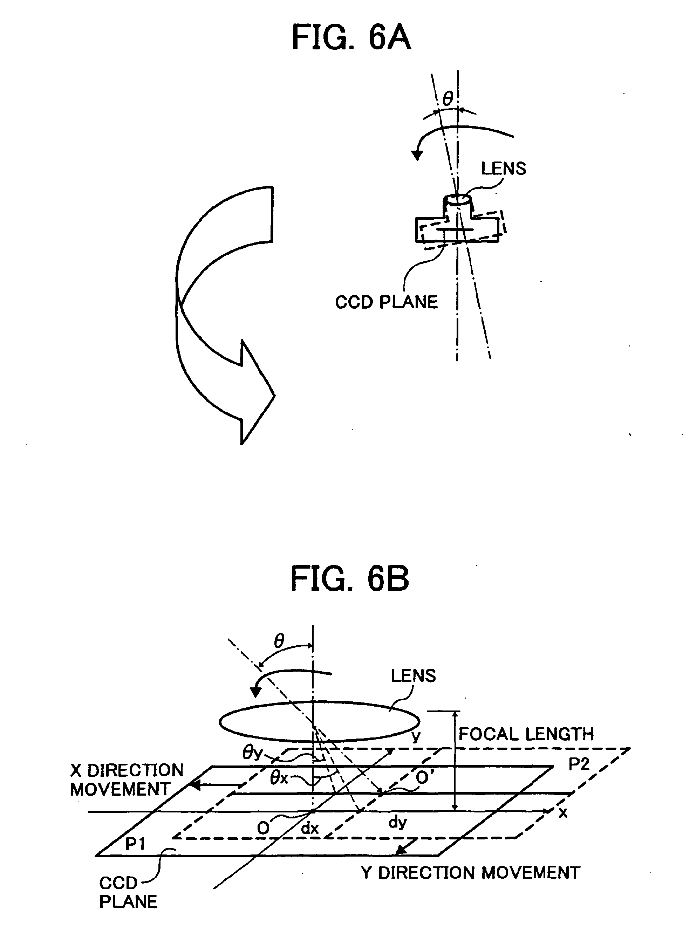

FIGS.6A and 6B are an explanatory view for explaining a principle of image blur suppression. FIG.6A presents a state where the digital camera as illustrated by the dotted line is inclined with respect to the digital camera which is free from camera shake as illustrated by the solid line. FIG.6B is a partly enlarged view illustrating a relationship between a photographing lens of the camera body and an imaging plane of the CCD solid-state image sensing device 101.

If the camera is not moved by the camera shake, and the imaging plane of the CCD solid-state image sensing device 101 is in a position P1, that is to say, in the central position, the subject image is projected on the original point O. Here, if the camera is inclined in a θ direction (θx, θy) by the camera shake, the imaging plane shifts to a position P2 and the subject image shifts to O'. In this case, the imaging plane is moved in parallel by dx in the X-direction and by dy in the Y-direction, such that a position of the imaging plane overlaps with the position P1. Thereby, the subject image returns to the original point O as an original position.

(Mechanical Structure of Suppression Function)

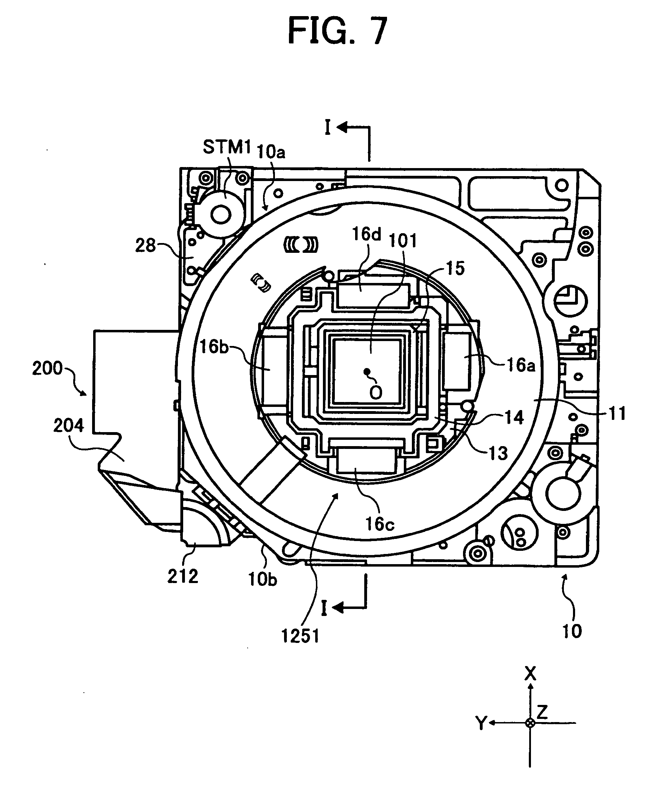

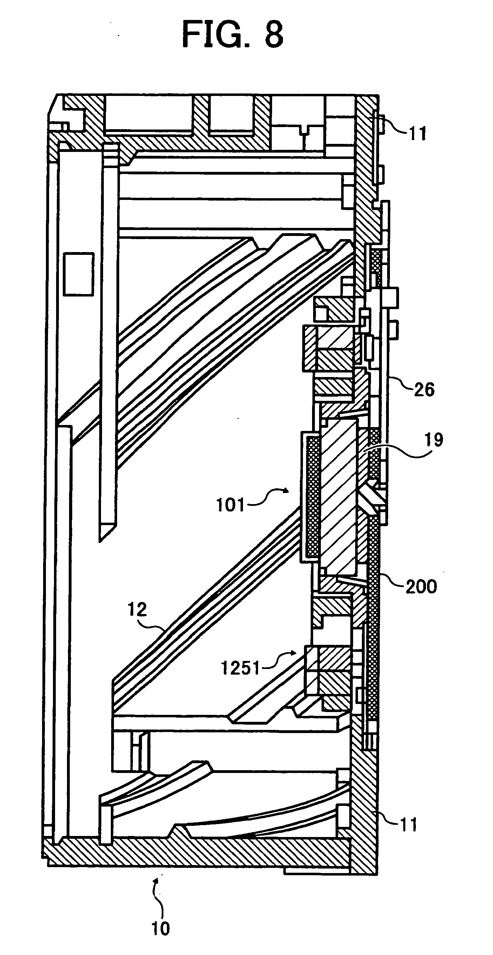

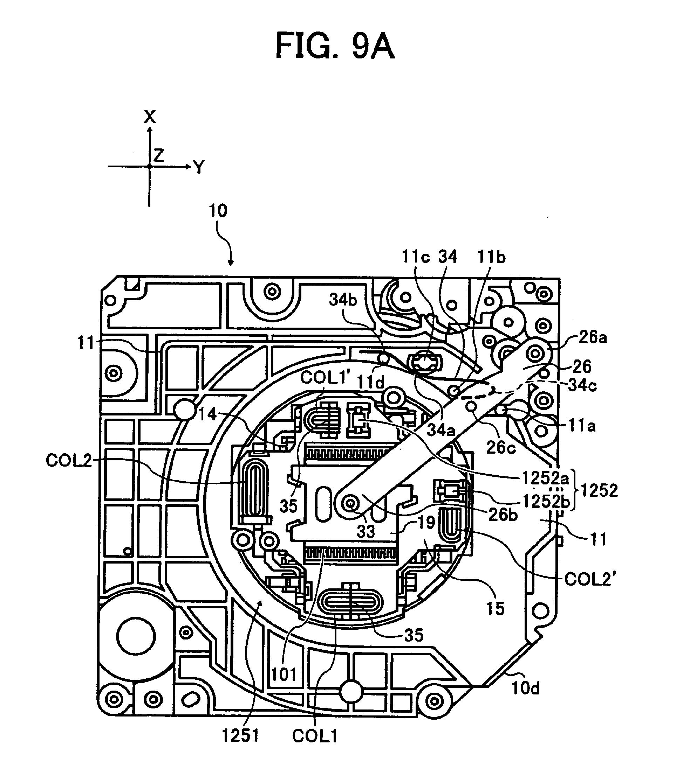

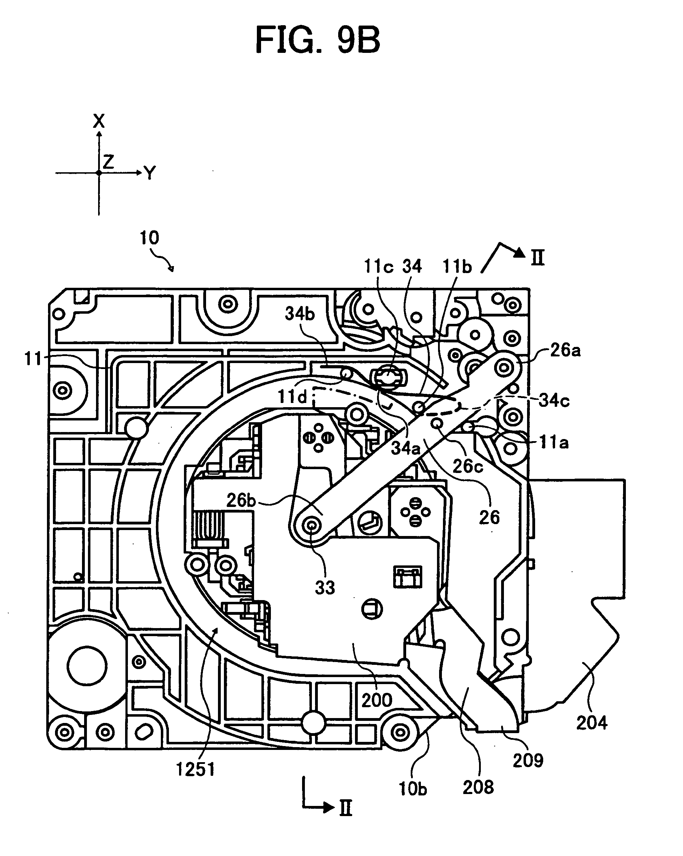

FIG.7 depicts a front view of the fixation barrel, FIG.8 depicts a sectional view of the fixation barrel taken along I-I line, and FIG.9 depicts a back view of the fixation barrel. Referring to FIGS. 7 to 9, reference number 10 denotes the fixation barrel. The fixation barrel 10 is formed in a box shape which has an inside used as a storage space for receiving the lens barrel. The fixation barrel 10 is provided to be fixed in the camera body and is set such that a positional relationship between the fixation barrel 10 and an optical axis is constant. The fixation barrel 10 has a back plane provided with a base member 11 formed in a plate-like and substantially rectangular shape on the whole. The fixation barrel 10 has an inner circumference wall formed with a helicoid 12 for extending and retracting the lens barrel. The fixation barrel 10 includes at least two notched corner portions. One of the corner portions 10a is used as an installation portion of an after-mentioned stepping motor STM 1, and the other corner portion 10a is used as a bending portion of an after-mentioned flexible board 200.

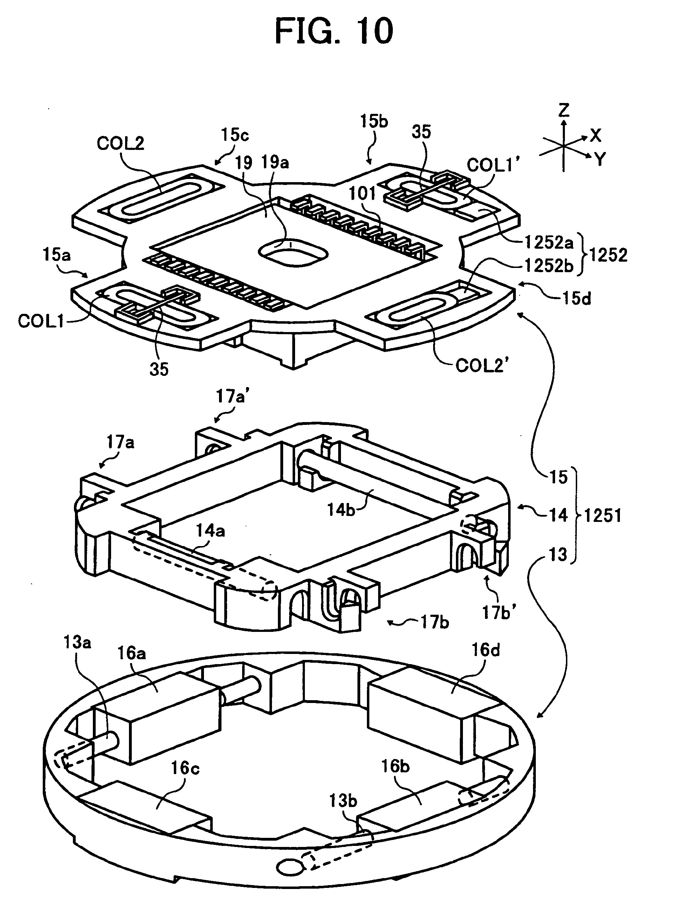

The CCD stage 1251 is provided on the base member 11. The CCD stage 1251 is basically configured to include an X-direction stage 13 having a circular frame shape, a Y-direction stage 14 having a rectangular shape and a mounting stage 15, as separately illustrated in FIG.10.

The X-direction stage 13 is fastened to the base member 11. The X-direction stage 13 is provided with a pair of guide shafts 13a, 13b extending in the X-direction at intervals in the Y-direction. The X-direction stage 13 is provided with four permanent magnets 16a~16d, each having a rectangular-solid shape. The four permanent magnets 16a~16d form two pairs; one pair of the permanent magnets 16a, 16b is disposed in parallel at intervals in the Y-direction within an X-Y plane. In this embodiment, the pair of guide shafts 13a, 13b is configured to penetrate the pair of permanent magnets 16a, 16b, respectively, but the pair of permanent magnets 16a, 16b and the pair of guide shafts 13a, 13b may be installed in combination. One pair of the permanent magnets 16c, 16d is disposed in parallel at intervals in the X-direction within the X-Y plane.

The Y-direction stage 14 is provided with a pair of guide shafts 14a, 14b extending in the Y-direction at intervals in the X-direction. The Y-direction stage 14 is also provided with a pair of supported portions 17a, 17a', which face each other at intervals in the X-direction, and a pair of supported portions 17b, 17b', which face each other at intervals in the X-direction. Each of the two pairs of supported portions (17a, 17a'), (17b, 17b') is movably supported on each of the guide shafts 13a, 13b, of the X-direction stage 13, respectively. Thereby, The Y-direction stage 14 is capable of moving in the X-direction.

The CCD solid-state image sensing device 101 is fastened onto the mounting stage 15. The mounting stage 15 includes a pair of coil attachment plate portions 15a, 15b overhanging in the X-direction and a pair of coil attachment plate portions 15c, 15d overhanging in the Y-direction. The CCD solid-state image sensing device 101 is fastened to a center of the mounting stage 15. The mounting stage 15 is provided with a pair of supported portions, which faces each other at intervals in the Y-direction toward the same side as the imaging plane of the CCD solid-state image sensing device 101. The supported portions are provided at interval in the X-direction. Each of the pairs of supported portions is movably supported on the guide shafts 14a, 14b of the Y-direction stage 14, which face each other, respectively. Thereby, the mounting stage 15 is disposed so as to be capable of moving in the X-Y direction on the whole. Therefore, the mounting stage 15 is movably supported by the X-direction stage 13 and the Y-direction stage along the X-Y plane, which are operating as guide stages. The X-direction stage is provided on the base member 11 of the fixation barrel 10 to be fixed in relation to the optical axis in a body case.

A protection plate 19 is attached to a back plane opposite to the imaging plane of the CCD solid-state image sensing device 101.

Provided on a center of the protection plate 19 is a concave portion formed in a tapered shape. The function of the concave portion 19a will be described later.

The pair of coil attachment plate portions 15a, 15b are provided with flat and scroll-like coil members COL1, COL1', respectively, which are serially connected, such that the coil members COL1, COL1' are contained in holes of the attachment plate portions, respectively. The pair of coil attachment plate portions 15c, 15d are provided with flat and scroll-like coil members COL2, COL2', respectively, which are serially connected, such that each of the coil members COL2, COL2' is contained in a hole of each of the attachment plate portions.

Each of the coil members COL1, COL1' is disposed to face each of the permanent magnets 16c, 16d. Each of the coil members COL2, COL2' is also disposed to face each of the permanent magnets 16a, 16b. The pair of coil members COL1, COL1' is used to move the CCD solid-state image sensing device 101 in the X-direction, and the pair of coil members COL2, COL2' is used to move the CCD solid-state image sensing device 101 in the Y-direction. Therefore, in this embodiment, the pair of coil members COL1, COL1' operates as a first coil, each of the permanent magnets 16c, 16d operates as a first permanent magnet, the pair of coil members COL2, COL2' operates as a second coil, and each of the permanent magnets 16c, 16d operates as a second permanent magnet.

Each of the coil members COL1, COL1' is provided with an adsorption bar 35 including a magnetic material in a direction so as to intersect each of the coil members COL1, COL1' in the X-direction, as presented in FIG.9. Therefore, each of the adsorption bars 35 is configured to face to each of the permanent magnets 16c, 16d which faces each of the coil members COL1, COL1' respectively, in a Z axis direction. The adsorption bars 35 are provided as a pair with the CCD solid-state image sensing device 101 (an image pick-up device) disposed therebetween, along the X-direction. In this embodiment, each adsorption bar 35 is provided so as to cross over substantially a center of each of the coil members COL1, COL1'.

In this case, Hall elements may be used for the position detection element 1252. One coil attachment plate 15b of the pair of the coil attachment plate portions 15a, 15b, is provided with a Hall element 1252a as the position detection element 1252. Similarly, one of the coil attachment plate portions 15c, 15d, for example, the coil attachment plate 15d of the attachment plate portions 15c, 15d is provided with a Hall element 1252b.

The CCD solid-state image sensing device 101 is electrically connected to the F/E IC 102 via the flexible board 200 (see FIG.4). The Hall elements 1252a, 1252b are electrically connected to the operational amplifier 1253 via the flexible board 200, and each of the coil members COL1, COL1', COL2, COL2' is electrically connected to the coil driver 1254 (see FIG.4).

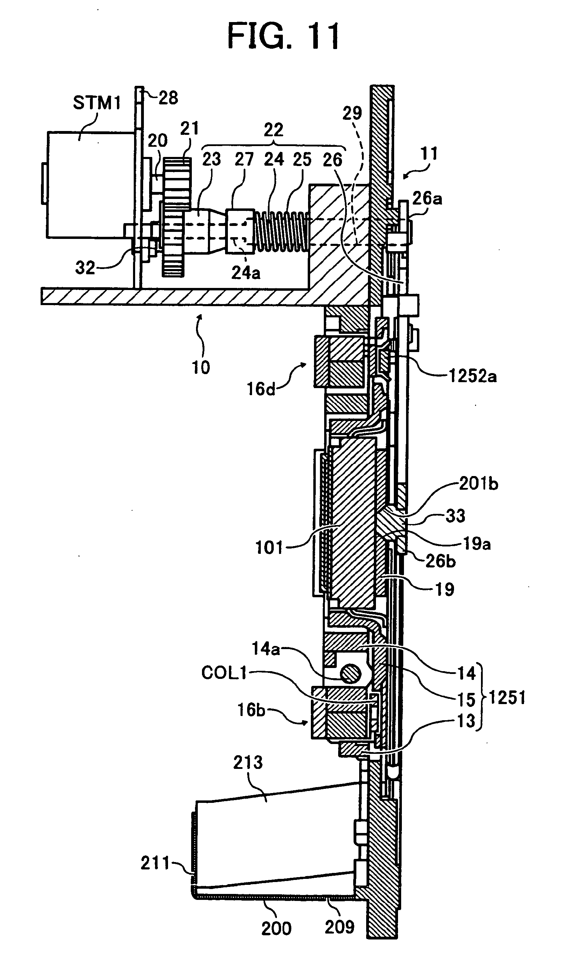

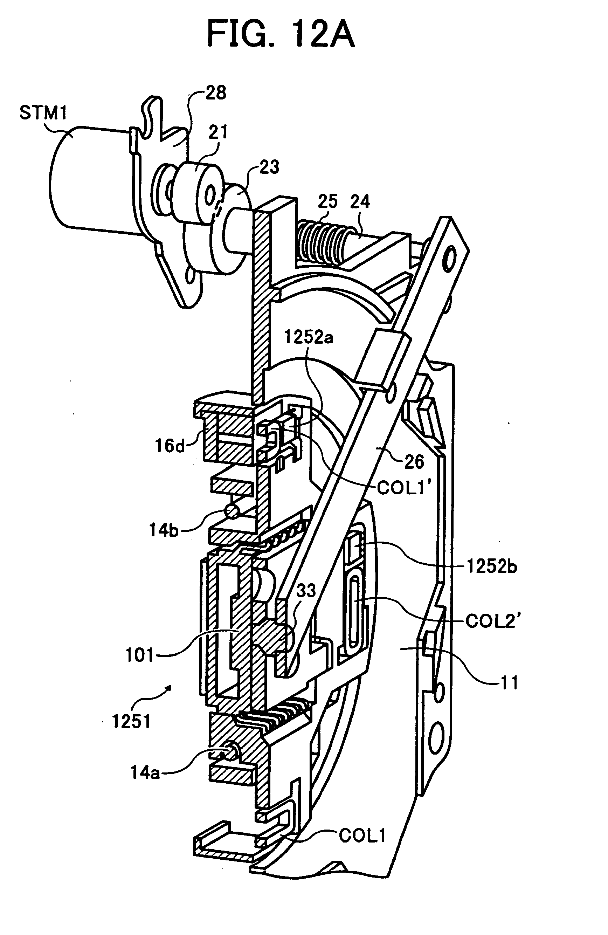

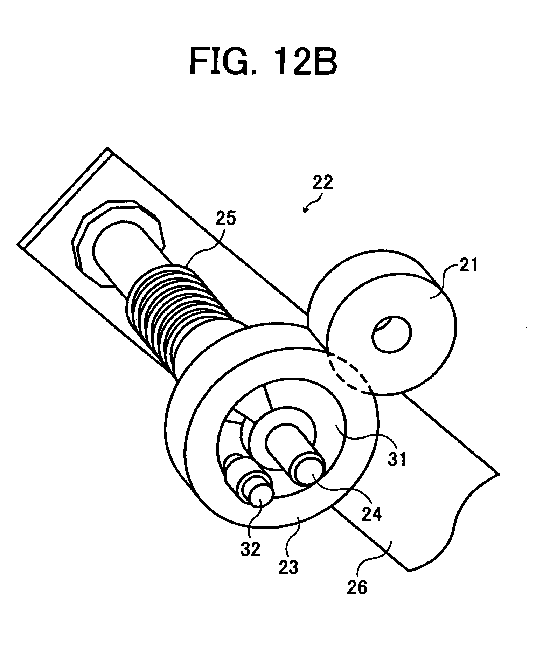

As illustrated in the enlarged views of FIGS.11, 12, the original point forced retention mechanism 1263 (see FIG.4) includes the stepping motor STM1. At first, the mechanical structure of the original point forced retention mechanism 1263 will be described in detail, and a driving and controlling of the stepping motor STM1 will be described later.

As illustrated in FIGS.7, 11, the stepping motor STM1 is provided in the corner portion 10a of the fixation barrel 10. The stepping motor STM1 has an output shaft 20 provided with an output gear 21. The corner portion 10a of the fixation barrel 10 is provided with a conversion mechanism 22 which converts rotational movements to linear movements.

The conversion mechanism 22 is comprised of a rotation transferring gear 23, a reciprocating shaft 24, a coil biasing spring 25, a forced retainer plate 26, and a spring supporting member 27. The corner portion 10a of the fixation barrel 10 is formed with a pair of supporting portions 28, 29 at intervals in the Z-axis direction. The supporting portion 28 is comprised of a motor attachment plate. The reciprocating shaft 24 is supported between the supporting portion 29 and the motor attachment plate 28. The rotation transferring gear 23 is located between the pair of supporting portions 28, 29 to be rotatably supported on the reciprocating shaft 24 and engaged with the output gear 21.

The reciprocating shaft 24 has a portion of one end side which penetrates the supporting portion 29 to reach the back plane side of the base member 11. The coil biasing spring 25 is provided between the spring supporting portion 27 and the supporting portion 29. The reciprocating shaft 24 is biased toward the supporting portion 28 by the coil biasing spring 25. The reciprocating shaft 24 includes a step portion 24a which engages with a shaft hole at an end plane of the rotation transferring gear 23.

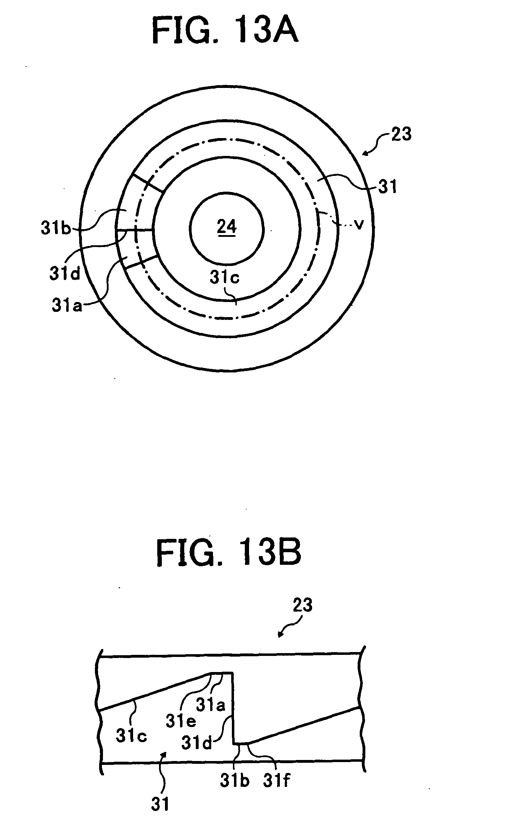

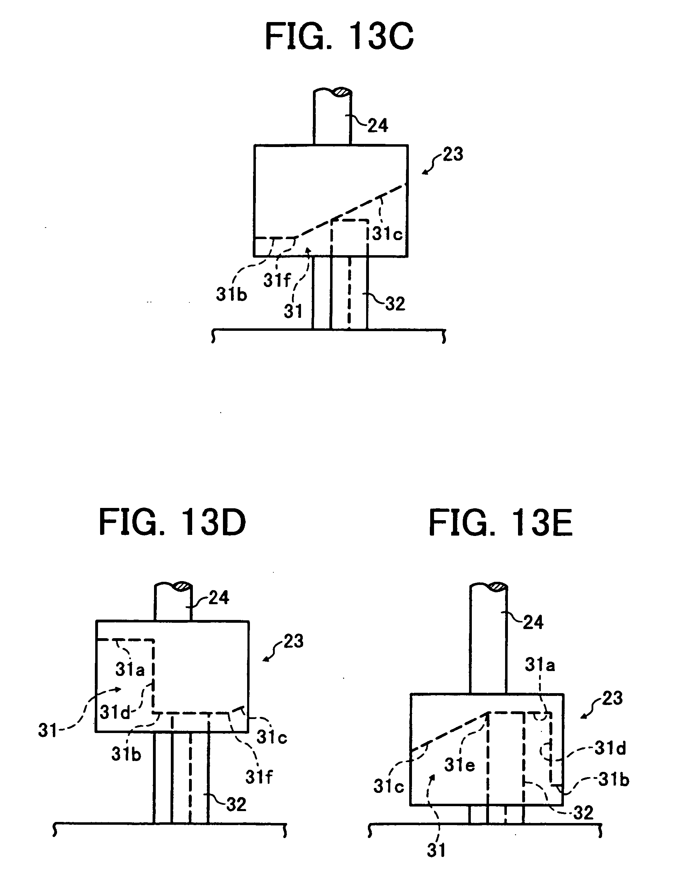

As presented in FIGS.13A-13E, the rotation transferring gear 23 has one of the end plane portions provided with a cam groove 31, which extends in a circumference direction of the rotation transferring gear 23, and is comprised of a flat valley portion 31a, a flat top portion 31b, and an inclined surface portion 31c inclining continuously from the flat valley portion 31a toward the flat top portion 31b. A cliff 31d is formed between the flat valley portion 31a and the flat top portion 31b as a contact wall with which an after-mentioned cam pin has contact from the rotation direction.

The cam pin 32 is fastened to the supporting portion 28, and has a leading end which slides in contact with the cam groove 31. The length in a rotation direction of the flat valley portion 31a from the cliff 31d to an incline start position 31e of the inclined surface portion 31c is equivalent to 2 pulses converted to a rotation control signal of the stepping motor STM1.

The length in a rotational direction of the inclined surface portion 31c from the incline start position 31e of the inclined surface portion to an incline end position 31f leading to the flat top portion 31b is equivalent to 30 pulses converted to the rotation control signal of the stepping motor STM1.

The length in a rotation direction of the peak flat portion 31b between the incline end position 31f and the cliff 31d is equivalent to 3 pulses converted to the rotation control signal of the stepping motor STM1. One rotation of the rotation transferring gear 23 is equivalent to 35 pulses in the stepping motor STM1 to cause the reciprocating shaft 24 to be reciprocated once in the Z-axis direction.

The base member 11 has a back plane side provided with the forced retainer plate 26, which roughly extends toward the center of CCD solid-state image sensing device 101 as shown in FIGS.9A, 9B. The forced retainer plate 26 has an end portion 26a fastened to one end portion of the reciprocating shaft 24. The forced retainer plate 26 has a free end portion 26b to which a taper shaped compressing pin 33 is fastened. A guide shaft 26c is formed to project in a middle of an extending direction of the forced retainer plate 26.

The base member 11 is provided with position determination projections 11 a, 11b, a coil attachment projection 11c and an engagement projection 11d. The coil attachment projection 11c is provided with a wound portion 34a of a torsion spring 34. The torsion spring 34 has one end portion 34b engaged with the engagement projection 11d and the other end portion 34c engaged with the guide shaft 26c. The base member 11 is formed with a guide hole (not shown) which guides the guide shaft 26c.

The forced retainer plate 26 has contact with the position determination projection 11a by the torsion spring 34 while reciprocating in a direction (the Z-axis direction) leaving or approaching with respect to the base member 11 according to a reciprocation of the reciprocating shaft 24. The guide shaft 26c functions to stabilize the reciprocation of the forced retainer plate 26.

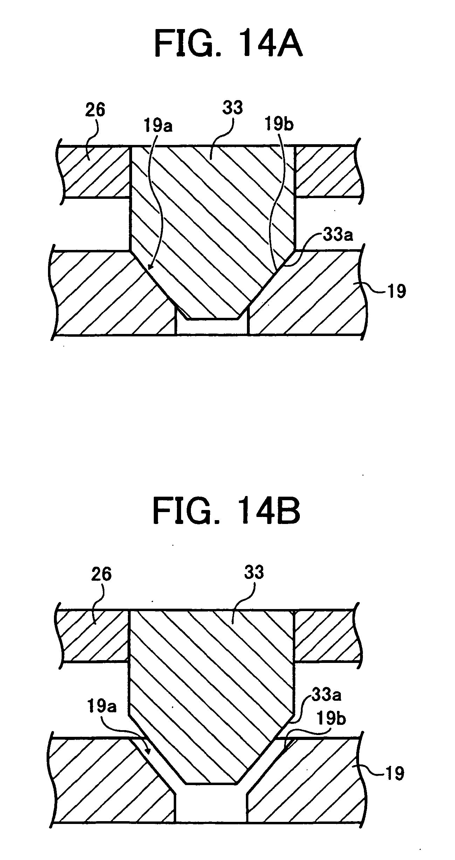

The compressing pin (fitting projection) 33 engages with the concave portion (fitting hole) 19a so as to fulfill the function for mechanically retaining the mounting stage 15 on the position of the original point. As illustrated in the enlarged view of FIG.14A, a stage in which a peripheral wall 33a of the compressing pin 33 is closely fitted to a peripheral wall 19b of the protection plate 19 corresponds to a holding standby position of the cam pin 32. As illustrated in the enlarged view of FIG. 14B, a stage in which the peripheral wall 33a of the compressing pin 33 is separated from a peripheral wall 19b of the protection plate 19 at the maximum intervals corresponds to a release standby stage of the cam pin 32. The holding standby position of the cam pin 32 is also the forced original point position of the mounting stage 15.

(Folding of Flexible Board)

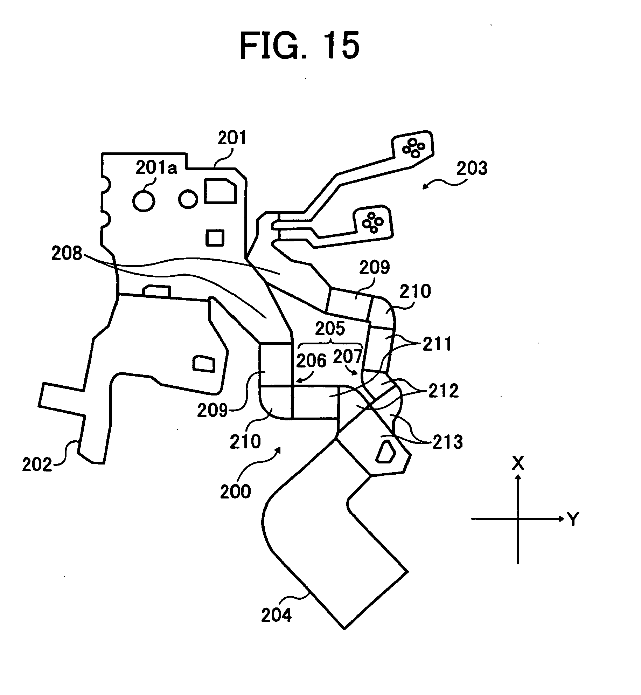

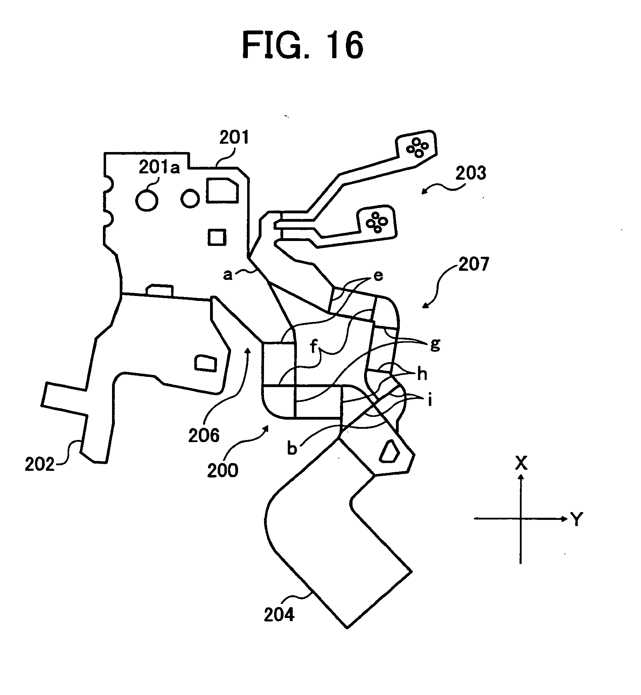

As illustrated in FIGS. 15-17, the flexible board 200 is comprised of a CCD connection portion 201, a coil connection portion 202, a position detection element connection portion 203, a block circuit connection portion 204, and an extension connection portion 205. (These names are also called without the "portion." For example, the extension connection portion 205 is simply called the "extension connection 205.") FIG.15 is a development view of the flexible board 200 seen from a backside of the CCD connection portion 201 and FIG.16 is a view for explaining folding of the flexible board 200 presented in FIG.15.

The CCD connection portion 201 is comprised of a connection pattern portion corresponding to a connection pin of the CCD solid-state image sensing device 101, a through-hole 201 a corresponding to the concave portion 19a of the protection plate 19, and the like. Moreover, the coil connection portion 202 is provided with a connection pattern portion (not shown) which is electrically connectable to each of the coil members COL1, COL1', COL2, COL2' (hereinafter, referred to as each of the coil members COL). Furthermore, the position detection element connection portion 203 is provided with a connection pattern portion which is electrically connectable to the position detection element 1252. The block circuit connection portion 204 is comprised of a connection pattern portion which is electrically connected to the F/E-IC 102, the operational amplifier 1253, and the coil driver 1254. Thereby, a system block circuit of the digital camera is electrically connected to the CCD connection portion 201, the coil connection portion 202 and the position detection element connection portion 203 through the extension connection portion 205.

In the present embodiment, as shown in FIGS.15, 16, the extension connection portion 205 is configured to branch into a first extension connection portion 206 and a second extension connection portion 207. The second extension connection portion 207 is configured to overlap with the first extension connection portion 206 when the extension connection portion 205 is folded along straight lines a, b shown in FIG.16. The second extension connection portion 207 has the same structure as that of the first extension connection portion 206 when the upper side and the under side of the second extension connection portion 207 are reversed; thus, the detailed explanations will be omitted.

The first extension connection portion 206 is comprised of a first extension portion 208, a second extension portion 209, a third extension portion 210, a fourth extension portion 211, a fifth extension portion 212, and a sixth extension portion 213, in order from a side of the CCD connection portion 201. The first extension portion 208 extends from the CCD connection portion 201, which is disposed in the back plane of CCD solid-state image sensing device 101 when being assembled, in a direction (a direction toward the corner portion 10b) inclined at about 45 degrees with respect to the Y-axis direction and the X-axis direction. The second extension portion 209 extends linearly along the X-axis direction inclined at about 45 degrees with respect to the first extension portion 208. The third extension portion 210 is comprised of a fan shape as a whole, and its apex angle is about 90 degrees, linking the second extension portion 209 and the fourth extension portion 211 without changing their width dimension. The fourth extension portion 211 is configured to have a same length as that of the second extension portion 209, and extends along a direction orthogonal to the second extension portion 209, that is to say, the Y-axis direction. The fifth extension portion 212 is comprised of a fan shape as a whole, and its apex angle is about 45 degrees, linking the fourth extension portion 211 and the sixth extension portion 213 without changing their width dimension. The sixth extension portion 213 is connected to the block circuit connection portion 204.

(Attachment of Flexible Board)

Next, the attachment of the flexible board 200 will be explained.

The flexible board 200 is mounted on the CCD stage 1251 from a side of the protection plate 19 such that the connection pattern portion of the CCD connection portion 201 conforms to the connection pin of the CCD solid-state image sensing device 101 and the through-hole 201 a conforms to the concave portion 19a (FIG.10).

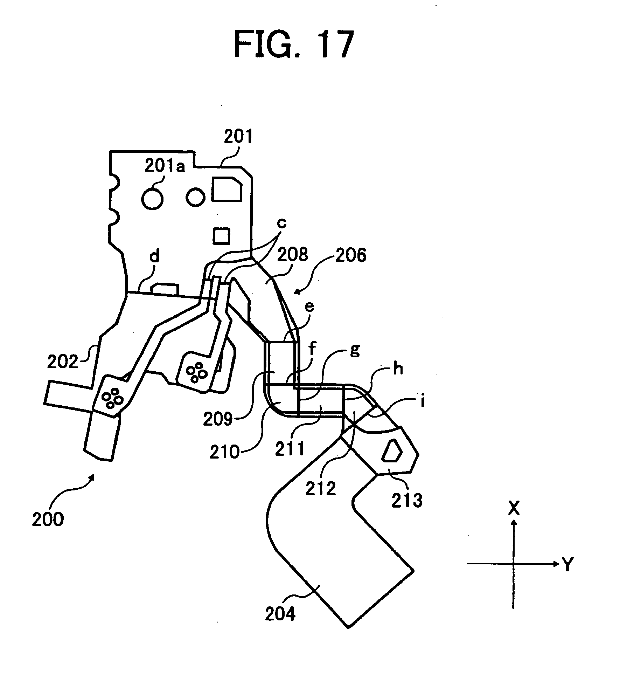

The printed board 200 is folded at 180 degrees as a valley fold with straight lines a, b shown in FIG.16 so that the second extension connection portion 207 overlaps with the first extension connection portion 206 as shown in FIG. 17. The printed board 200 is folded at 180 degrees as a valley fold with a straight line c shown in FIG.17 so that the position detection element connection portion 203 overlaps with the CCD connection portion 201 to connect electrically the position detection element connection portion 203 to the position detection element 1252 as shown in FIG.17. The printed board 200 is folded at 180 degrees as a valley fold with a straight line d shown in FIG.17 so that the coil connection portion 202 overlaps with the CCD connection portion 201 to connect electrically the coil connection portion 202 to each coil member COL. As mentioned above, the flexible board 200 is mounted on the CCD stage 1251 to be positioned in the X-Y plane on the base member 11.

Next, as illustrated in FIGS.9B, 11, 18, and 19, the flexible board 200 is folded substantially at a right angle as a mountain fold along a straight line e shown in FIG.17 so that the second extension portion 209 extends along the Y-Z plane (see FIG.18) at the corner portion 10b of the fixation barrel 10. Moreover, the flexible board 200 is folded substantially at a right angle as a mountain fold along a straight line f, so that the third extension portion 210 extends in the X-Y plane where the third extension portion 210 is displaced along the Z axis from the base member 10 toward the lens barrel side and extends to be closer to the fixation barrel 10 side than the second extension portion 209. Next, the flexible board 200 is folded substantially at a right angle as a valley fold along a straight line g so that the fourth extension portion 211 extends along the X-Z plane (see FIG.18) near the corner portion 10b of the fixation barrel 10. Furthermore, the flexible board 200 is folded substantially at a right angle as a valley fold along a straight line h, so that the fifth extension portion 212 extends in the X-Y plane where the fifth extension portion 212 is displaced along the Z axis from the base member 11 toward the lens barrel side, and extends to be closer to the fixation barrel 10 side than the fourth extension portion 211. The flexible board 200 is folded substantially at a right angle as a valley fold along a straight line i, so that the sixth extension portion 213 extends to be adjacent to the corner portion 10b of the fixation barrel 10 and in parallel substantially to the corner portion 10b. The block circuit connection portion 204 is connected such that the block circuit connection portion 204 is curved from the sixth extension portion 213, which is formed by folding along the line i, to be along a circumference surface of the fixation barrel 10 and forms a plane which is substantially parallel to the X-Z plane (see FIG.18). An end portion of the block circuit connection portion 204 is curved in a direction where it leaves the Z axis near a substantially same plane as that of the base member 11 to form the same plane as that of the base member 11, and is electrically connected to a printed circuit board PCB (described later) on which the F/EIC 102, the operational amplifier 1253, the coil driver 1254, and the like are disposed.

(Attachment of Flexible Board)

Here, a structure of a setting and an attachment of the flexible board as a main part of the present invention will be described in detail.

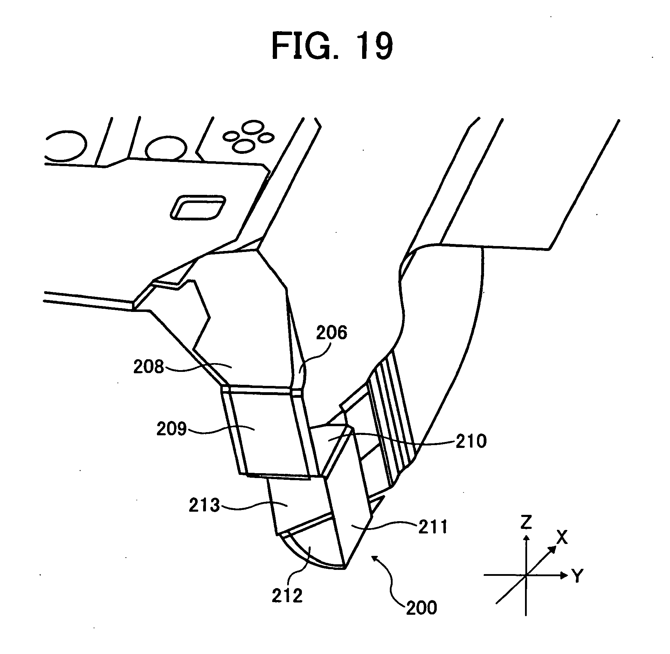

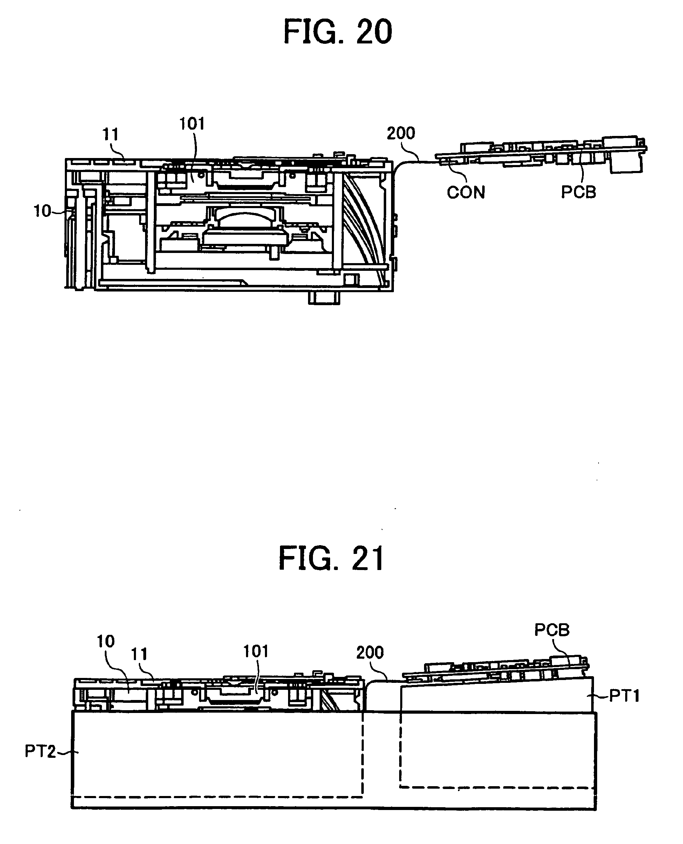

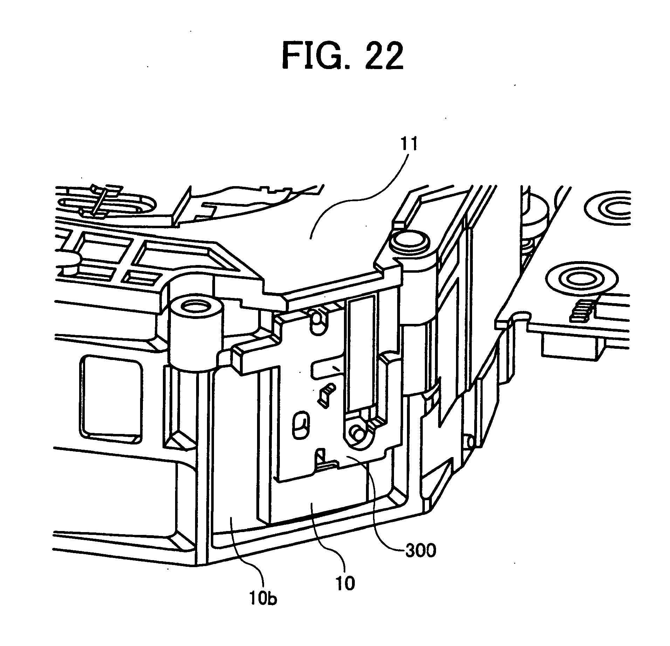

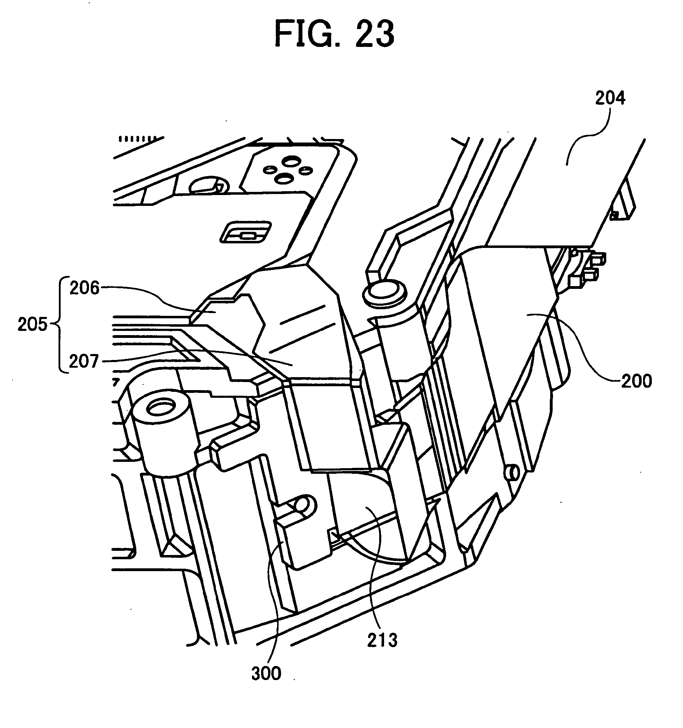

FIG.18 is a perspective view showing a part of the fixation barrel portion on which the CCD solid-state image sensing device 101, the barrel unit 7, and the like are mounted, the printed circuit board PCB to which the F/EIC 102, the processor 104, or the like are installed, and the flexible board 200 which couples between a part of the CCD solid-state image sensing device 101 and the printed circuit board PCB, viewed from a back plane side of the fixation barrel 10. An axis line which passes through the original point of the image pick-up device and extends in a direction of the optical axis is the Z axis, and the X-Y plane is a plane in a direction perpendicular to the Z axis. FIG.19 is an enlarged view presenting in detail a connection portion of the flexible board, FIG.20 is a sectional view taken along the Y-Z plane shown in FIG.18, FIG.21 is a side view for explaining the attachment among the part of the fixation barrel 10, the printed circuit board PCB and the flexible board, and FIGS. 22 and 23 are views presenting in detail main parts for explaining the structure of turning and the attachment of the flexible board 200.

In FIG.11, the CCD stage is configured such that the X-direction stage 13 is fixed on the base member 11 fixed on the fixation barrel 10, the Y-direction stage 14 is supported so as to be capable of sliding in the X direction with respect to the X-direction stage 13, and the mounting stage 15 is supported so as to be capable of sliding in the Y direction on the Y-direction stage 14. The solid-state image sensing device 101 is fixed on the mounting stage 15 of the CCD stage 1251. The CCD connection portion 201 of the flexible board 200 is connected to the CCD solid-state image sensing device 101 and a circumferential portion thereof on the mounting stage 15 near the upper surface side shown in FIGS. 18, 20 and 21. The processor 104 is installed on the upper surface side in FIGS. 18, 20, 21 and the like of the printed circuit board PCB. The block circuit connection portion 204 of the flexible board 200 is connected to a connector CON provided on a lower surface side in the figures of the printed circuit board PCB.

On the attachment, at first, the CCD connection portion 201 of the flexible board 200 is connected and fixed to the CCD solid-state image sensing device 101 and the circumferential portion thereof for example by soldering. After folding the flexible board 200 as predetermined, the block circuit connection portion 204 of the flexible board 200 is connected to the connector CON of the printed circuit board PCB to be configured as illustrated in FIGS. 18 and 20. Then, as shown in FIG. 21, after the printed circuit board PCB is fixed to a first part PT1, the first part PT1 and the fixation barrel 10 are fixed by a second part PT2.

At that time, it is difficult for the printed circuit board PCB to be mounted on the first part PT1 with an accurate fixed positional relationship because of the fixation of the printed circuit board PCB.

Since the fixation barrel 10 and the print circuit board PCB are mutually fixed through by the second part PT2 and the first part PT1, their positional relationship varies for each assembly. In this way, when a variation in the positional relationship occurs between the fixation barrel 10 and the print circuit board PCB, the positional relationship between the CCD connector 201 of the flexible board 200 and the processing circuit connector 204 varies. In order to absorb a reactive force, as an image blur suppression, caused by the X and Y direction movements of the CCD solid state image sensing device 101, an extension connector 205 of the flexible board 200 is appropriately bent to form a first portion to be parallel to the X-Z plane and a second portion to be parallel to the Y-Z plane.

However, as described above, when the positional relationship between the CCD connector 201 of the flexible board 200 and the processing circuit connector 204 varies, a twist and a tension are subtly produced in the extension connector 205 and are indefinite. Because of this, a reactive force caused by the movement of the CCD solid state image sensing device 101 cannot be ignored. To solve the problem, one of the solutions is for the processing circuit connector 204 to integrally fixed with the fixation barrel 10. However, when a positional variation described above arises, the processing circuit connector 204 is strained related to a fixing point, which further produces a slight distortion and strain in the extension connector 205.

On the other hand, a bending of the embodiment of the invention is described above in detail. As shown in FIG. 19, the extension connector 205 includes the first extension 208 extending parallel to the X-Y plane, the second extension 209 extending continuous with the first extension 208 and directed toward a subject along the Z axis direction parallel to an optical axis, viewed from the CCD solid state image sensing device 101, the third extension 210 continuous with the second extension 209 and extending parallel to the X-Y plane, the fourth extension 211 continuous with the third extension 210 and extending to the subject direction seen from the CCD solid state image sensing device 101 along the Z axis direction, the fifth extension 212 continuous with the fourth extension 211 and extending parallel to the X-Y plane, and the sixth extension 213 continuous with the fifth extension 212 and extending along the Z axis direction in a direction away from the subject seen from the CCD solid state image sensing device 101, the processing circuit connector 204 to be connected to the connector CON being continuously provided with the end thereof.

The second extension 209 is set parallel to the Y-Z plane, and the fourth extension 211 is set parallel to the X-Z plane. The flexible board 200 branches into the first extension connector 206 and the second extension connector 207 at the bottom of the first extension 208. The first extension connector 206 and the second extension connector 207 are unified at the sixth extension 213. When folded, the first extension connector 206 and the second extension connector 207 are almost completely overlapped. Therefore, between the first extension 208 and the sixth extension 213, the first extension connector 206 and the second extension connector 207 are overlapped with the second extension connector 207 upward as shown in the figure, to be formed as the extension connector 205 as described above.

FIG. 22 shows a corner portion 10b and the vicinity thereof of the fixation barrel 10 when the flexible board 200 is removed from the fixation barrel 10 (also called the "fixing barrel") in accordance with the embodiment of the invention. One side of an adhesive board 300, both sides of which are attached by a two-side adhesive tape, is adhered to an outer surface of the portion 10b of the fixation barrel 10. A portion of the sixth extension 213 of the flexible board 200 is attached to the other side of the adhesive board 300. By doing so, the sixth extension 213 is fixed to the corner portion 10b of the fixation barrel 10 by the adhesive board 300.

FIG. 23 shows the corner portion 10b of the fixation barrel 10 to which the flexible board 200 is adhered through the adhesive board 300. One portion of the back side of the sixth extension 213 is attached to the fixation barrel 10 by the adhesive board 300. This enables the first to fifth extensions 208-212 except for the sixth extension 213 to move freely without receiving a reactive force. When the CCD solid state image sensing device 101 moves to the X direction, the sixth extension 213 can absorb and reduce a reactive force in the X direction during movement because the second extension 209 transforms mainly. Similarly, when the CCD solid state image sensing device 101 moves to the Y direction, the fourth extension 211 can absorb and reduce a reactive force in the Y direction because the fourth extension 211 transforms mainly.

In this case, when connecting to the CON the processing circuit connector 204 continuous with the sixth extension 213 and mounting the print circuit board PCB to the fixation barrel 10, the extensions 206-213 containing the second and fourth extensions 209 and 211 for absorbing a reactive force do not produce changes in position and shape caused by the mounting, owing to the fact that the sixth extension 213 is fixed beforehand. Accordingly, deterioration of performance based on the mounting operation can be effectively prevented.

As described above, the relative position of the PCB, to which the processing circuit connector 204 is connected, is widely variable and unstable, with respect to the position of the fixation barrel 10, to which the CCD connector 201 is connected. On the other hand, the flexible board 200 in accordance with the invention is closer to the PCB than the sixth extension 213 fixed on the fixation barrel 10 shown in FIGS. 19 and 23. The part extending between the sixth extension 213 and the processing circuit connector 204 and the processing circuit connector 204 just before being connected to the PCB are bent, forming a belt, respectively. Because of this, these portions tend to transform in the X-Y direction and Z direction shown in the figure, respectively to readily absorb a displacement of these directions. In particular, the end and vicinity thereof to be connected to the PCB can effectively absorb a relatively large displacement.

Accordingly, the flexible board 200 in accordance with the invention can be smoothly connected to the PCB whose position is unstable, because of its flexibility. The portions of the flexible board 200 closer to the CCD connector 201 than the sixth extension 213, which is adhesively fixed on the fixation barrel 10 through the adhesive board 300, undergo no variation in relative position except for an image blur suppression movement. A variation in a relative position of the PCB with respect to the position of the fixation barrel 10 is absorbed by the adhesive board 300. As a result, any influence of a reactive force is curbed.

The bending portions of the first extension 208 to sixth extension 213 of the extension connector 205 are formed along the Z axis at the corner 10b of the fixation barrel 10. Accordingly, an environmental space for the lens barrel is formed conventionally in a circular shape, that is, the corner 10b of the fixation barrel 10 can be effectively used. In addition, digital cameras need not be large-sized by providing a bending extension.

The flexible board 200 has a structure in which the extension connector 205 has a symmetrical shape of first extension connector 206 and second extension connector 207, both of which are branched, and can be folded. Therefore, the number of signal channels can be increased without increasing a dimension of the width of the extension connector 205. In addition, bending portions can be formed in a limited space at the corner 10b of the fixation barrel 10. Because of this, in a case of a small number of signal channels, the second extension connector 207 need not be provided.

A deflection-preventive auxiliary board provided with the flexible board 200 prevents a deflection from being produced from the CCD connector 201 of the flexible board 200 through the first extension 208 to the second extension 209, and exerts a force caused by the movement of the mounting stage on the second extension 209 and the fourth extension 211. As a consequence, a reactive force can be reliably absorbed at the bending portions.

(Second embodiment)

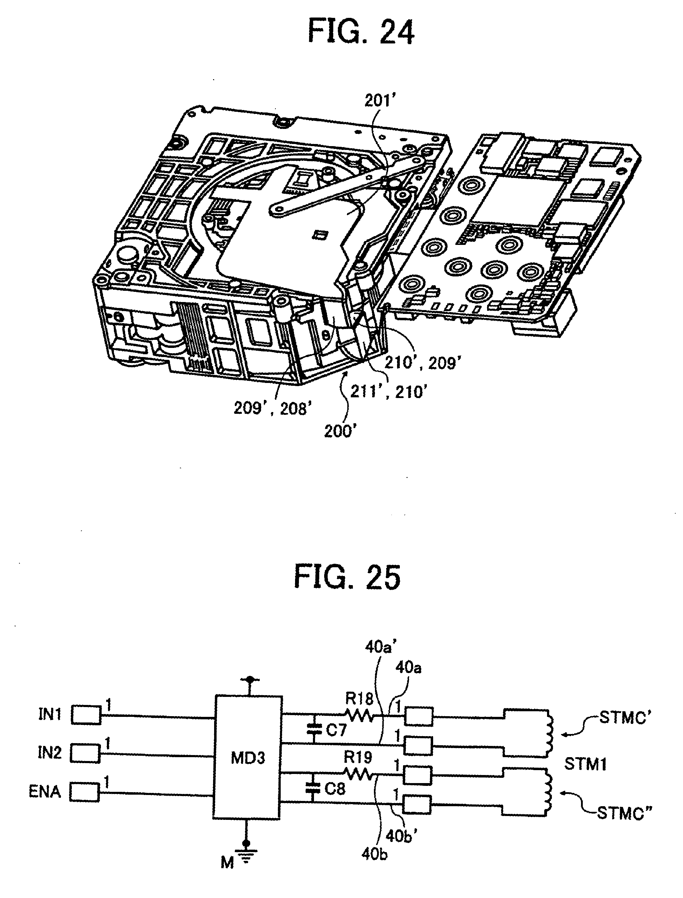

As mentioned above, because the first extension portion 208 extends from the CCD connection portion 201 in the same plane, the CCD connection portion 201 may extend to include a portion corresponding to the first extension portion 208 so that the first extension portion 208 is substantially omitted. Therefore, the second extension portion 209 may be configured to extend directly from the CCD connection portion 201 toward the subject by bending at a right angle, and this configuration is illustrated in FIG. 24 as a flexible board 200' according to the second embodiment of the present invention.

More specifically, a second extension portion 209' which is parallel to the Y-Z plane extends directly in the Z axis direction from a CCD connection portion 201', and a fourth extension portion 211' which is parallel to the X-Z plane extends in the Z axis direction via a third extension portion 210' so that the reaction force is absorbed mainly by the second extension portion 209' and the fourth extension portion 211'.

In addition, it is possible for the first extension portion 208' which is parallel to the Y-Z plane to extend in the Z axis direction from the CCD connection portion 201' and the third extension portion 210' which is parallel to the X-Z plane to extend in the Z axis direction via the second extension portion 209' which is parallel to the X-Y plane so that the reaction force may be absorbed mainly by a first extension portion 208' and the third extension portion 210'.

(Retention Control Circuit of Suppression Mechanism)

The stepping motor STM1 is controlled by a retention control circuit illustrated in FIG. 25. The stepping motor STM1 comprises a two-phase control structure, and includes a first coil STMC' having terminals connected a motor driver MD3 via output lines 40a, 40a'. A second coil STMC" has terminals connected to the motor driver MD3 via output lines 40b, 40b'. The output line 40a is provided with a resistance for limiting current R18, and also the output line 40b is provided with a resistance for limiting current R19. A capacitor C7 is disposed between the output line 40a and the output line 40a' and a capacitor C8 is also disposed between the output line 40b and the output line 40b'.

Retention control signals are input to the motor driver MD3 from ports IN1, IN2 of the processor 104, and an enable signal is input to a port ENA of the processor 104. The motor driver MD3 controls the power distribution to the stepping motor STM1 based on the retention control signals and the enable signal.

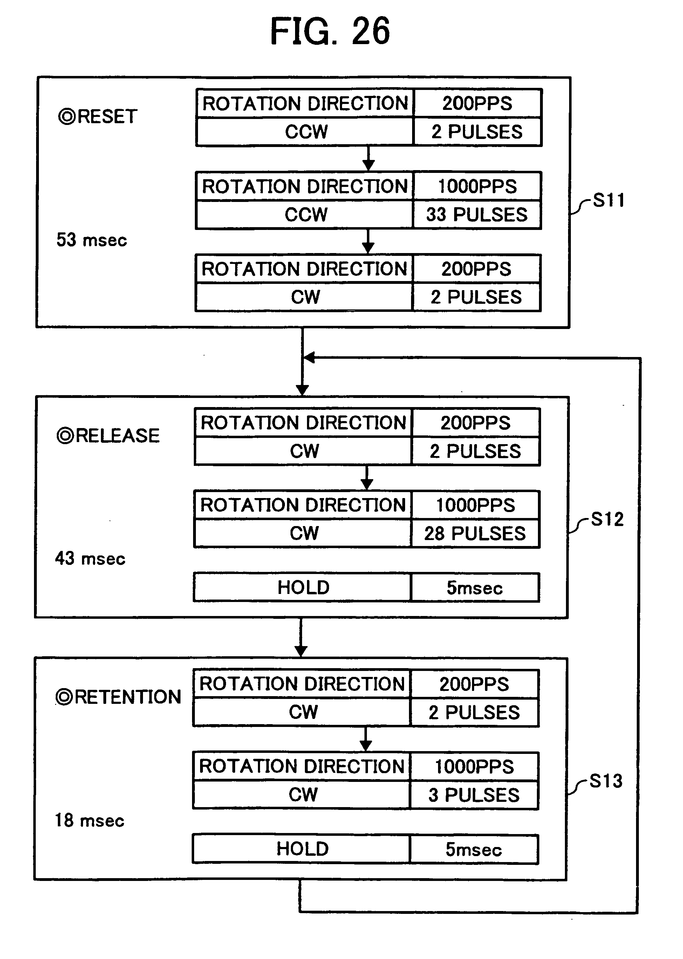

FIG.26 is a flow chart for explaining the operation of the retention control circuit, illustrating three steps such as a reset process, a release process and a retention process. When the power switch SW13 of the digital camera is turned on, at first, the reset process is performed according to the control of the processor 104 (S.11). In this reset process, the stepping motor STM1 rotationally drives according to 2 pulses in the counter-clockwise direction at a slow rate of 200 pps (pulse per second) by the control of the processor 104. Next, the stepping motor STM1 rotationally drives according to 33 pulses in the counter-clockwise direction at a fast rate of 1000 pps. Finally, the stepping motor STM1 rotationally drives according to 2 pulses in the clockwise direction at a slow rate of 200 pps.

Wherever the cam pin 32 is in the rotation direction of the cam groove 31, the cam pin 32 physically has contact with the cliff 31d of the cam groove 31 by rotating the stepping motor STM1 according to 35 pulses in the counter-clockwise direction.

If the stepping motor STM1 drives according to 2 pulses in the clockwise direction from the contact position, the cam pin 32 is set in the incline start position 31 e of the cam groove 31 (reference to FIG.13E).

The state where the cam pin 32 is set in the incline start position 31e of the cam groove 31 is the reset position which corresponds to the state where the CCD solid-state image sensing device 101 is forcibly retained in the position of original point O. The position of original point O is the central position of the movable area of the mounting stage 15. The time required from the power on to the completion of reset is about 53 msec (millisecond).

In this suppression mechanism, the image blur suppression is carried out by tuning on the suppression switch SW 14, and the image blur suppression is released at the same time as the suppression switch SW14 is turned off or the photographing is completed.

If the suppression switch SW14 is turned on, the release process is performed by the control of the processor 104 (S.12). In this release process, at first, the stepping motor STM1 rotationally drives according to 2 pulses in the clockwise direction at a slow rate of 200 pps. Next, the stepping motor STM1 rotationally drives according to 28 pulses in the clockwise direction at a fast rate of 1000 pps. Finally, the power distribution to the stepping motor STM1 is maintained for 5 msec. Next, the power distribution to the stepping motor STM1 is stopped by the motor driver MD1.

With this release process, the cam pin 32 is located in the incline end position 31 f of the cam groove 31 (refer to FIG. 13D). The time required from the incline start position 31e to the incline end position 31 f is about 43 msec. More particularly, the time required for the cam pin 32 to move from a hold standby position to a release standby position is about 43 msec. The suppression control is performed in this release standby position.

Next, if the suppression switch SW14 is turned off or the photographing is performed, the processor 104 carries out the retention process (S.13). In this retention process, the stepping motor STM1 rotationally drives according to 2 pulses in the clockwise direction at a slow rate of 200 pps by the control of the processor 104, and then rotationally drives according to 3 pulses in the clockwise direction at a fast rate of 1000 pps. The cam pin 32, thereby, comes down to the flat valley portion 31 a by passing through the flat top portion 31b of the cam groove 31 to have contact with the flat valley portion 31a. After that, the power distribution to the stepping motor STM1 is maintained for 5 msec.

Next, the motor drive MD1 stops the power distribution to the stepping motor STM1. The cam pin 32 is, therefore, set in the incline start position 31e of the cam groove 31, and the central position of CCD solid-state image sensing device 101 is retained. While the power is supplied, if the reset process is performed, these release and retention standby processes are carried out. Moreover, the time required for the cam pin 32 to move from the release standby position to the retention standby position is about 18 msec.

Since the suppression mechanism includes the structure for forcibly retaining the mounting stage 15 of CCD solid-state image sensing device 101 in the central position by the compressing pin 33 formed in the forced retainer plate 26, it is not necessary to control the power distribution for keeping the retention of the mounting stage 15 in the position of original point; thus, the power consumption can be reduced when operating the suppression mechanism.

(Circuit Structure of Camera Shake Detection Circuit)

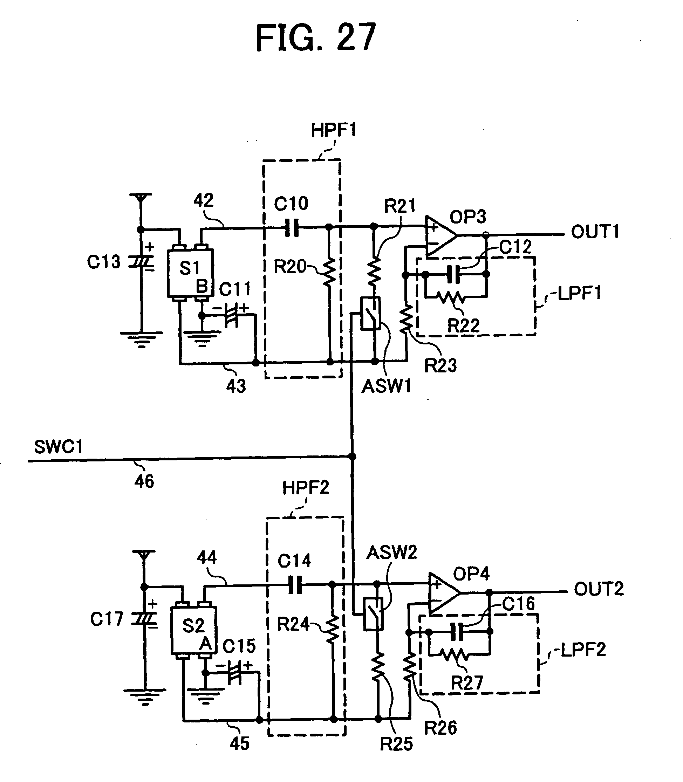

FIG.27 is a view illustrating a circuit structure of a camera shake detection circuit. The camera shake detection circuit comprises an X direction rotation detector, which detects the rotation in the X direction, and a Y direction rotation detector, which detects the rotation in the Y direction.

The X direction rotation detector comprises, for example, a piezoelectric vibration gyro sensor S1B having a first terminal grounded via a capacitor C 13, a second terminal connected to a non-inverting input terminal (+) of an operational amplifier OP3 via a capacitor C10 provided in a connection line 42, a third terminal connected to an inverting input terminal (-) of the operational amplifier OP3 via a resistance R23 provided in a connection line 43, and a fourth terminal grounded and also connected to the connection line 43 via a capacitor C11.

The operational amplifier OP3 has the non-inverting terminal (+) connected to the connection line 43 via a resistance R20. A series circuit comprising a resistance R21 and an analogue switch ASW1 is connected between the connection line 42 and the connection line 43 in parallel with the resistance R20.

The operational amplifier OP3 has an output terminal connected to an inverting input terminal (-) of the operational amplifier OP3 via a capacitor C12. A resistance R22 is connected to the capacitor C12 in parallel. The capacitor C10 and the resistance R10 make up a high-pass filter HPF1, and the capacitor C 12 and the resistance R22 make up a low-pass filter LPF1. The operational amplifier OP3 amplifies the output of piezoelectric vibration gyro sensor S1B to output an X direction detection signal OUT1 from the output terminal of operational amplifier OP3.

The Y direction rotation detector comprises a piezoelectric vibration gyro sensor S2A having a first terminal grounded via a capacitor C17, a second terminal connected to a non-inverting input terminal (+) of an operational amplifier OP4 via a capacitor C14 provided in a connection line 44, a third terminal connected to an inverting input terminal (-) of the operational amplifier OP4 via a resistance R26 provided in a connection line 45, and a fourth terminal grounded and also connected to the connection line 45 via a capacitor C15.

The operational amplifier OP4 has the non-inverting input terminal (+) connected to the connection line 45 via a resistance R24. A series circuit comprising a resistance R25 and an analogue switch ASW2 is connected between the connection line 44 and the connection line 45 in parallel with the resistance R24. The operational amplifier OP4 has an output terminal connected to the inverting input terminal (-) of the operational amplifier OP4 via a capacitor C16. A resistance R27 is connected to the capacitor 16 in parallel. The capacitor C14 and the resistance R24 make up a high-pass filter HPF2, and the capacitor C16 and the resistance R27 make up a low-pass filter LPF2. The operational amplifier OP4 amplifies the output of the piezoelectric vibration gyro sensor S2A to output an X direction detection signal OUT2 from the output terminal of operational amplifier OP4.

A switching control signal SWC1 is input to the analogue switches ASW1, ASW2 via a signal line 46. Each of the analogue switches ASW1, ASW2 includes a function for accelerating the charge of each of the capacitors C11, C 15, so as to increase the response speed of each of the high-pass filters HPF1, HPF2. The processor 104 outputs the switching control signal SWC1 to the analogue switches ASW1, ASW2 for a predetermined time after turning on the power; thus, the analogue switches ASW1, ASW2 are turned on for a predetermined time. The detection outputs OUT1, OUT2 of the gyro sensors S1B, S2A are loaded into the A/D converter 10411 every T seconds.
Where,

ω yaw (t) ... instant angular velocity in YAW direction
ω pitch (t)... instant angular velocity in PITCH direction
θ yaw (t)... angular variation in YAW direction
θ pitch (t)... angular variation in PITCH direction
Dyaw (t)... movement amount of image in X-direction corresponding to rotation in YAW direction.
Dpitch (t)... movement amount of image in Y-direction corresponding to rotation in PITCH direction,
θ yaw (t) and θ pitch (t) are obtained by the following relational expressions,

$$\theta \text{ yaw (t)} = \Sigma \, \omega \text{ yaw (i)} \cdot T$$

$$\theta \text{ pitch (t)} = \Sigma \, \omega \text{ pitch (i)} \cdot T.$$

Moreover, a focal length f is determined from a zoom point zp and a focal point fp. The following equations are established among Dyaw (t), the movement amount of the image corresponding to rotation in the YAW direction, Dpitch (t), the movement amount of the image corresponding to rotation in the PITCH direction, θ yaw (t), the angular variation in the YAW direction, and θ pitch (t), the angular variation in the PITCH direction,.

$$\text{Dyaw (t)} = f * \tan ( \theta \text{ yaw (t)} ) \ldots (i)$$

$$\text{Dpitch (t)} = f * \tan ( \theta \text{ pitch (t)} ) \ldots (ii)$$

Namely, Dyaw (t), the movement amount of the image in the X-direction corresponding to rotation in the YAW direction, and Dpitch (t), the movement amount of the image in the Y-direction corresponding to rotation in the PITCH direction, correspond to the movement amount of the CCD solid-state image sensing device 101 which should be moved in the X-Y direction.

If the rotation displacements in the YAW direction and in the PITCH direction occur due to camera shake, the reference position (as the target position) of CCD is calculated by the above (i), (ii) to drive the mounting stage 15 such that a difference between the actual position of the CCD solid-state image sensing device 101 in the X-Y direction detected by the position detection element 1252 and the target position of the CCD solid-state image sensing device 101 becomes zero. This control is performed every T seconds.

In addition, if the detection output of the gyro sensors S1B, S2A is zero, the mounting stage 15 is controlled such that the CCD solid-state image sensing device 101 is translational-displaced by following a translational motion displacement Xd of the camera body.

(Suppression Control Circuit)

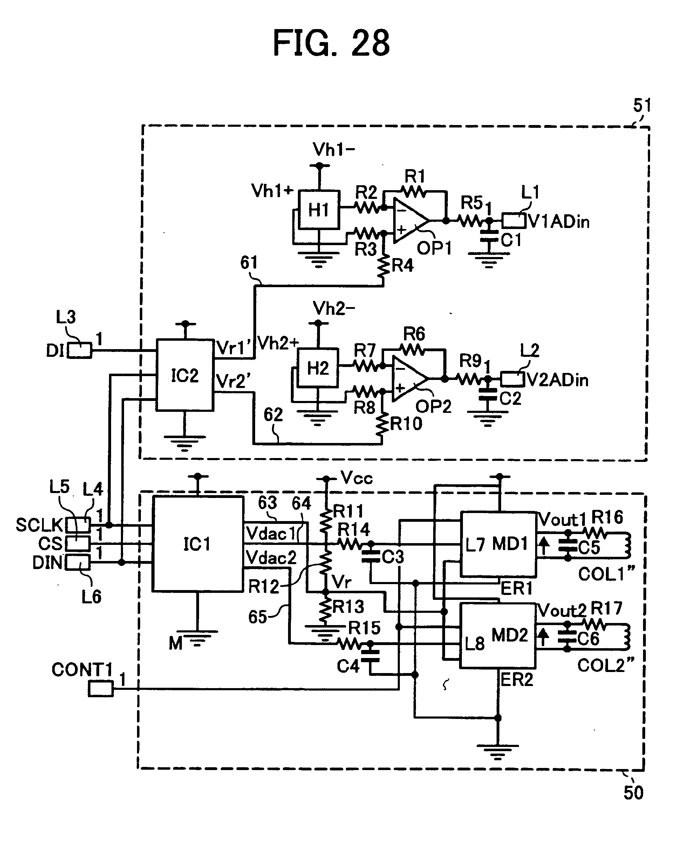

FIG.28 is a block diagram illustrating one example of a control circuit for suppressing an image blur. The suppression circuit comprises a feedback circuit 50 and a position correspondence voltage setting circuit 51. Hall elements H1, H2 constitutes a part of the position correspondence voltage setting circuit 51. A voltage Vh1- is applied to the Hall element (1252a) H1. The Hall element H1 has a terminal connected to an inverting input terminal (-) of an operational amplifier OP1 via a resistance R1 and another terminal connected to a non-inverting input terminal (+) of the operational amplifier OP1 via a resistance R3.

The operational amplifier OP1 has an output terminal connected to an input port L1 of the processor 104 via a resistance R5 and also connected to the inverting input terminal (-) of the operational amplifier OP1 via the resistance R1. In addition, a connection point between the resistance R5 and the input port L1 is grounded via a capacitor C1.

A voltage Vh2- is applied to the Hall element (1252b) H2. The Hall element H2 has one terminal connected to an inverting input terminal (-) of an operational amplifier OP2 via a resistance R7 and the other terminal connected to a non-inverting input terminal (+) of the operational amplifier OP2 via a resistance R8.

The operational amplifier OP2 has an output terminal connected to an input port L2 of the processor 104 via a resistance R9 and also connected to one terminal of operational amplifier OP2 via a resistance R6. In addition, a connection point between the resistance R9 and the input port L2 is grounded via a capacitor C2.

The processor 104 has an output port L3 connected to a D/A conversion circuit IC2 comprising a part of the position correspondence voltage setting circuit 51, output ports L4, L6 connected to the D/A conversion circuit IC2 and the D/A conversion circuit IC1, and an output port L5 connected to the D/A conversion circuit IC1.

Connected to the D/A conversion circuit IC2 are two output lines 61, 62, one output line 61 being input to the non-inverting input terminal (+) of the operational amplifier OP1 via a resistance R4 and the other output line 62 being input to the non-inverting input terminal (+) of operational amplifier OP2 via a resistance R10.

A chip selector signal DI from the output port L3, a clock signal SCLK from the output port L4, and correction digital data DIN from the output L6 are input to the D/A conversion circuit IC2 having a function which converts the correction digital data into the analogue data.

The D/A conversion circuit IC1 constitutes a part of the feedback circuit 50. A common line 63 and two output lines 64, 65 are connected to the D/A conversion circuit IC1. The common line 63 is connected to a coil drive circuit MD1 and a coil drive circuit MD2. The output line 64 is connected to an input terminal L7 of the coil drive circuit MD1 via a resistance R14. The output line 65 is connected to an input terminal L8 of the coil drive circuit MD2 via a resistance R15.

The connection point between the resistance R14 and the input terminal L7 is connected to a ground terminal ER1 of the coil drive circuit MD1 via a capacitor C3. The connection point between the resistance R15 and the input terminal L8 is connected to a ground terminal ER2 of the coil drive circuit MD2 via a capacitor C4. The common line 63 is connected to a power source Vcc via resistances R12, R11, and the connection point is grounded via a resistance R13.

A control signal CONT1 is input to the coil drive circuits MD1, MD2 from the processor 104. The coil drive circuit MD1 has an output terminal connected to a coil COL1" (serial connection body of a coil member COL1 and a coil member COL1') via a resistance R16. A capacitor C5 is connected in parallel with the serial circuit of the resistance R16 and the coil COL1". The coil drive circuit MD2 has an output terminal connected to a coil COL2" (serial connection body of a coil member COL2 and a coil member COL2') via a resistance R17. A capacitor C6 is connected in parallel with the serial circuit of the resistance R17 and the coil COL2".

The coil COL 1" is used to move the mounting stage 15 in the X direction, and the coil COL2" is used to move the mounting stage 15 in the Y direction.

Here, voltages Vh1-, Vh2- are applied to the Hall elements H1, H2, respectively, and the detection output voltage levels of the Hall elements H1, H2 are configured to be Vh1, Vh2 when the detection outputs of the gyro sensors S1B, S2A are zero and also the CCD solid-state image sensing device 101 exists in the central position (original point) of the movable area. In this case, the analogue output voltage levels of the input ports L1, L2 of the processor 104 are configured to be V1ADin, V2ADin, respectively. These output voltage levels V1ADin, V2ADin are actually measured.

The output voltage levels (actual measurement values) V1ADin, V2ADin are varied based on an assembling error factor regarding the mechanical positional relationship between the magnets (permanent magnet) 16a-16d and the Hall elements H1, H2, and an assembling error factor between the mounting positions of the Hall elements H1, H2 and the mounting positions of the coils COL1", COL2" with respect to the mounting stage 15, or the like. In addition, the output voltage levels vary according to the characteristics of the Hall elements H1, H2.

Therefore, if correction is not performed, the detection values of the Hall elements H1, H2 corresponding to the position of the original point vary for each of cameras; thus, accurate image blur suppression can not be conducted.

Consequently, correction voltages Vr1', Vr2', which are input to the operational amplifiers OP1, OP2 respectively from the analogue/digital converter IC2, are set, such that the output voltage levels V1ADin, V2ADin before correcting become constant voltage levels (setting reference voltage levels). More particularly, the correction voltages Vr1', Vr2' are set so as to correct the variations in the output voltage levels (detection values) V1ADin, V2ADin when the CCD solid-state image sensing device 10 1 exists in the position of original point and the CCD solid-state image sensing device 101 is not controlled (when the power is not supplied to the coil members COL1", COL2").

In this case, in order to set the setting reference voltage level at, for example, 1.7 volts, which is substantially a central value of movable range voltage of the operational amplifiers OP1, OP2, the processor 104 performs the following calculation.

Here, for the sake of convenience, the resistances are set to R2 = R3 = R7= R8, R1 = R4 = R10 = R6, but not limited thereto.

Under the conditions of R2=R3=R7=R8,R1=R4=R10=R6, the following relational expressions are realized.

$$V1ADin = R1 \; / \; R2 \; * \; ((Vh1+) - (Vh1-)) + Vr1'$$

$$V2ADin = R1 \; / \; R2 \; * \; ((Vh2+) - (Vh2-)) + Vr2'$$

The processor 104 obtains the correction voltages Vr1', Vr2' by the calculation based on the above relational expressions. As a result, the output voltage levels are constant even if the detection values of the Hall elements H1, H2 in the position of the original point of the CCD solid-state image sensing device 101 vary based on the assembling error factor regarding the mechanical positional relationship between the magnets (permanent magnets) 16a-16d and the Hall elements H1, H2, the assembling error factor between the mounting positions of the Hall elements H 1, H2 and the mounting positions of the coils COL1", COL2" with respect to the mounting stage 15, or the like.

The processor 104 constitutes, together with the D/A conversion circuit IC2, a part of a variation correction circuit, which outputs correction values for setting the detection values to the setting reference voltage levels regardless of the variations in the detection values of the Hall elements H1, H2, and also functions as a correction value calculation device which obtains the setting reference voltage values by the calculations.

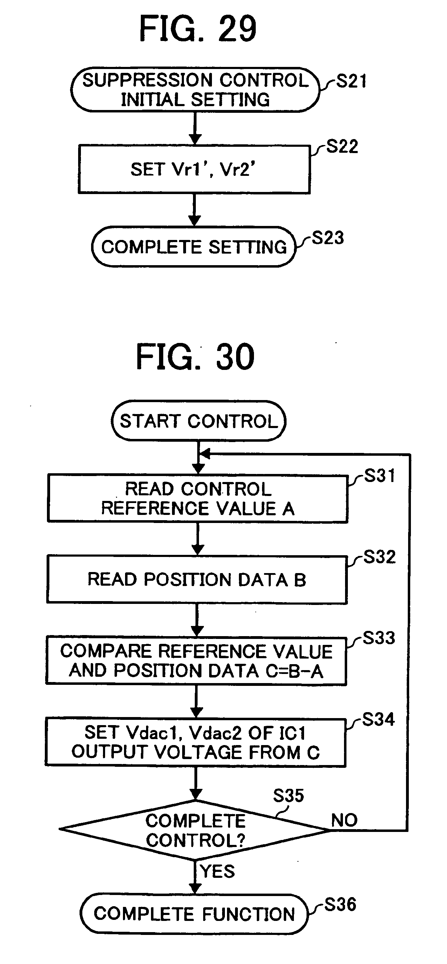

This initial setting is set before shipment and is a final inspection in a factory for assembling a camera, as illustrated in the flow chart of FIG.29 (refer to S.21-S.23).

As presented in the flow chart of FIG.30, in the actual control of image blur suppression, the processor 104 loads the control reference values obtained by the calculations based on the detection outputs OUT1, OUT2 of the camera shake detection circuit (S. 31), and then loads the actual position correspondence voltage levels V1ADin, V2ADin obtained by the Hall elements H1, H2 (S. 32); thereby, the processor 104 calculates the difference between the control reference values and the position correspondence voltage values V1ADin, V2ADin (S. 33).

The processor 104 outputs the control data to the digital/analogue conversion circuit IC1 based on the output of the difference. The digital/analogue conversion circuit IC1 outputs control voltages Vdac1, Vdac2 corresponding to the control data (S. 34). The control voltages Vdac1, Vdac2 are input to the coil drive circuits MD1, MD2. The coil drive circuits MD1, MD2 output driving voltages Vout1, Vout2 to the COL1", COL2", respectively.

The driving voltages Vout1, Vout2 are set according to the following equations.

$$Vout1 = (Vdac1 - Vr) \; * \; K$$

$$Vout2 = (Vdac2 - Vr) \; * \; K$$

Where, Vr is division voltage.

In this case, reference number K is a ratio constant based on the division voltage, Vr.

The CCD solid-state image sensing device 101 is attracted and repelled by the magnetic field of the magnets 16a-16d and the coils COL1", COL2" to move in the direction which is controlled by the driving voltages Vout1, Vout2 of positive voltage or negative voltage. The detected values of the Hall elements H1, H2 are, thereby, changed. The position correspondence voltage levels V1ADin, V2ADin are changed corresponding to the change in the detected values, and the position correspondence voltage levels are fed back to the processor 104, so the CCD solid-state image sensing device 101 can be smoothly followed to the target position when the control reference values are changed by the detection output values of the camera shake detection circuit (S.35). If the photographing is completed, the control is concluded (S.36).

(Modification Example)

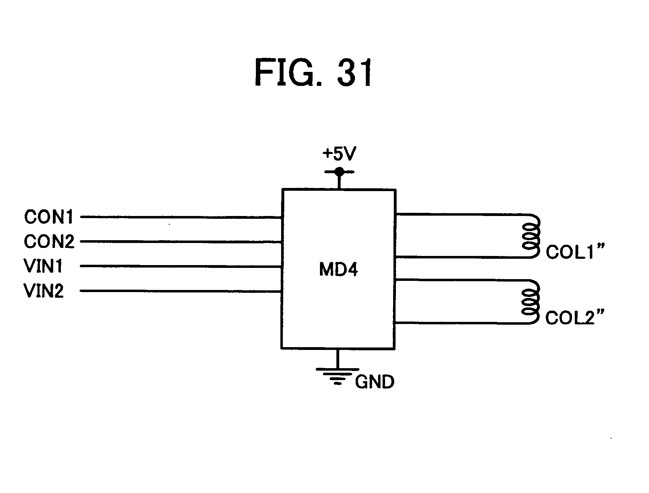

FIG.31 is a circuit diagram illustrating a modification example of the feedback circuit 50. In this case, the processor 104 controls the driving of a coil driver MD4 by means of PWM control (pulse-width modulation control), so as to control the power distribution to the coils COL1", COL2". More particularly, a normal direction signal CON1 and a reverse direction signal CON2 are input to the coil driver MD4, and pulse voltages Vin1 and Vin2 are input. The power distribution voltages to the coils COL1", COL2" increase as the duration of a high level pulse signal gets longer.

(Details of Photographing by Suppression Mechanism)

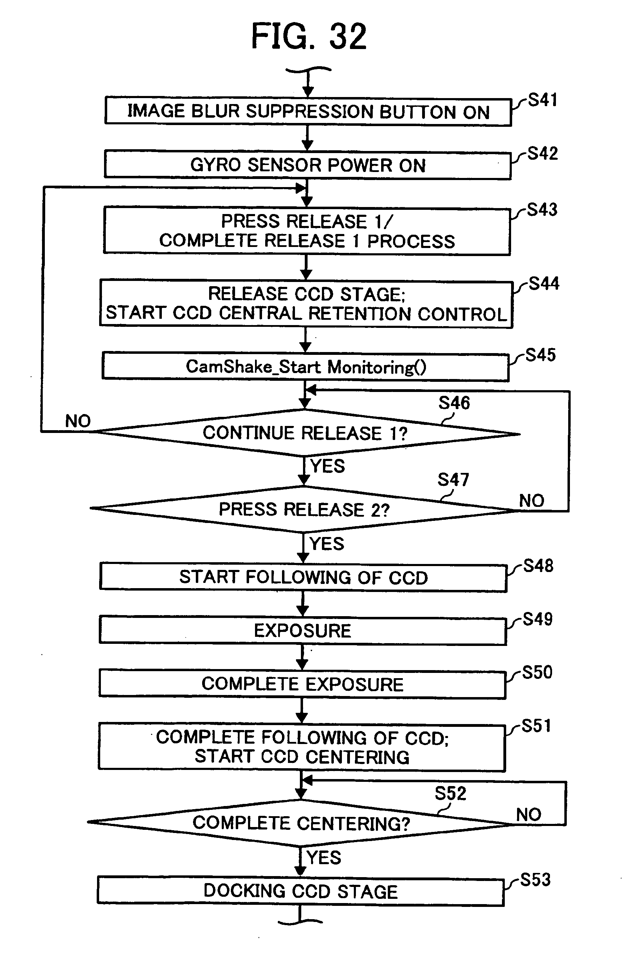

As illustrated in FIG.32, if the suppression switch SW14 is turned on (S.41), the gyro sensors S1B, S2A are powered on (S.42). If the release switch SW1 is pressed to complete a half-pressing (S.43), an auto focusing operation (focusing operation) is initiated (S.44). At the same time, the mechanical forced fixation of the mounting stage 15 is released, and the CCD central retention control is initiated by the power distribution to the coils COL1", COL2" (S.44).

Next, the monitoring process of camera shake is initiated (S.45). The processor 104 determines whether or not the half-pressing of the release switch SW1 is continued (S.46). If the half-pressing of the release switch SW1 is continued, the processor 104 determines whether or not the full-pressing of the release switch SW 1 is performed (S. 47). If the half-pressing of the release switch SW1 is released, the flow goes back to step S.43, and if the full-pressing of the release switch SW1 is not performed, the flow goes back to step S.46.

If the full-pressing of the release switch SW1 is completed, the following of the CCD solid-state image sensing device 101 is started in the moving direction of the image (S.48). Next, an exposure is performed (S.49). If the exposure is completed (S.50), the following of the CCD solid-state image sensing device 101 is stopped, the mounting stage 15 is returned to the position of the original point by the power distribution control to the coils COL1 ", COL2" (S.51), it is determined whether or not the mounting stage 15 is returned to the position of the original point (S.52), and the CCD is forcibly fastened to the position of the original point in a mechanical manner (S.53).

There are two modes for the operation timing of the release switch SW1.

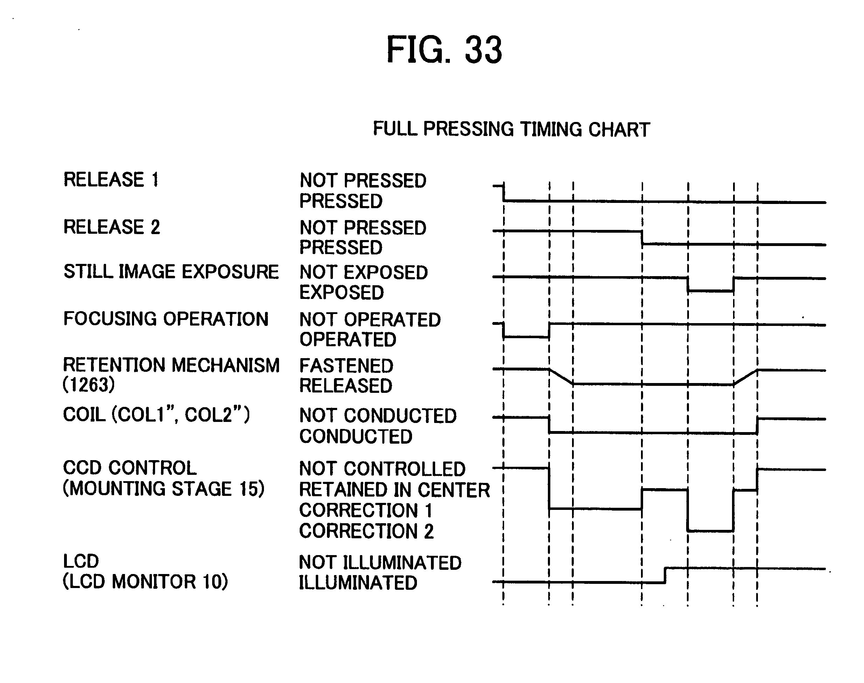

FIG.33 is a timing chart of a process for suppressing an image blur in the case of a full-pressing of the release switch SW1. In this case, the full-pressing means a release operation having discontinuity from the half-pressing operation of the release switch SW 1 to the full-pressing operation of the release switch SW1, for example, a photographing operation which shifts to an exposure start operation at the right moment after the half-pressing operation.

If the release switch SW1 is half-pressed, the focusing operation of the digital camera is started. In this state, the original point forced retention mechanism 1263 has not released the forced retention of the mounting stage 15 yet. The power is not supplied to the coils COL1", COL2", that is, the coils are not conducted. In addition, the mounting stage 15 is mechanically fixed to the central position, and the subject image is displayed onto the LCD monitor 10.

If the focusing operation is completed, the processor 104 starts supplying power to the stepping motor STM1 of the original point forced retention mechanism 1263. The mechanical forced retention of the mounting stage 15 is, thereby, released. At the same time, supplying power to the coils COL1", COL2" is started, i.e., current is conducted through the coils, and the suppression process during the half-pressing operation of the release switch SW1 (release 1) is performed by the control of the power supply to the coils COL1", COL2". If the release switch SW1 is fully pressed (release 2), the mounting stage 15 is once returned to the central position by the control of power distribution to the coils COL1", COL2", and then the LCD monitor 110 is turned off after some time so as not to display the subject image.

Next, if the still image exposure is started, the mounting stage 15 is controlled to follow the movement of the image based on the camera shake. If the still image exposure is completed, the mounting stage 15 is returned to the central position based on the control of power distribution to the coils COL1", COL2". Next, the processor 104 starts the power distribution to the stepping motor STM1 of the original point forced retention mechanism 1263. The mechanical forced fixation of mounting stage 15 is, thereby, performed, and then the power distribution to the coils COL1", COL2" is stopped.

As described above, even if the camera is shaken, a user can recognize the LCD monitor 110 to monitor the subject image without having the camera shake during the release 1.

In addition, if the mounting stage 15 is returned to the central position during the release 2, the composition during the release 2 is displaced with respect to the composition of the subject image during the release 1. However, according to the present embodiment, it is possible to confirm the subject image right before photographing in a state where the mounting stage 15 is once returned to the central position, so it is possible to confirm the composition of the subject image right before photographing (right before exposing).

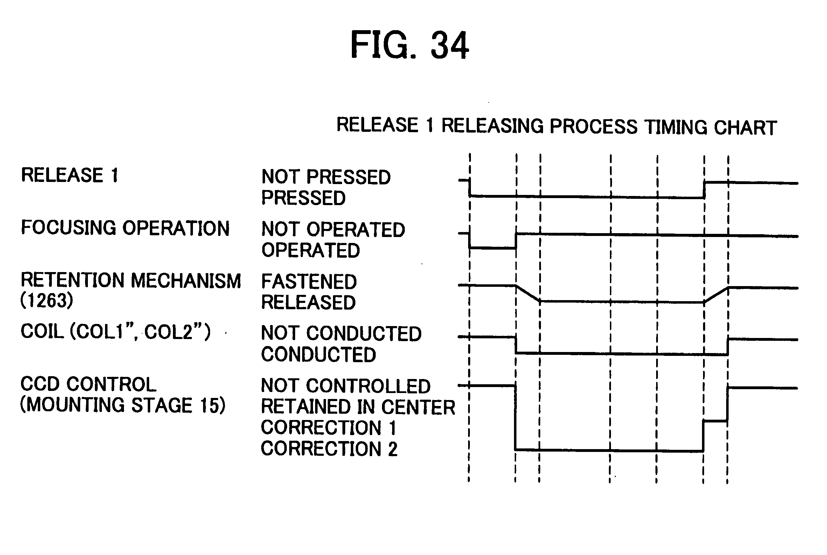

If the release switch SW1 is half-pressed, and the half-pressing of the release switch SW1 is released without fully pressing the release switch SW1, as presented in FIG. 34, the focusing operation is started at the same time as the half-pressing. If the focusing is completed, the processor 104 starts the power distribution to the stepping motor STM1 of the original point forced retention mechanism 1263; thereby, the mechanical forced retention of the mounting stage 15 is released. At the same time, the power supply to the coils COL1", COL2" is started, that is, the coils are conducted, and the suppression process during the half-pressing operation of the release switch SW1 (release 1) is performed by the control of power supply to the coils COL1 ", COL2".

If the half-pressing operation of release switch SW1 is released during the half-pressing operation of the release switch SW1, the mounting stage 15 is retuned to the central position based on the control of power supply to the coils COL1", COL2". Next, the processor 104 starts the power supply to the stepping motor STM1 of the original point forced retention mechanism 1263; thereby, the mechanical fixation and retention of the mounting stage 15 are conducted. Next, the power distribution to the coils COL1 ", COL2" is stopped.

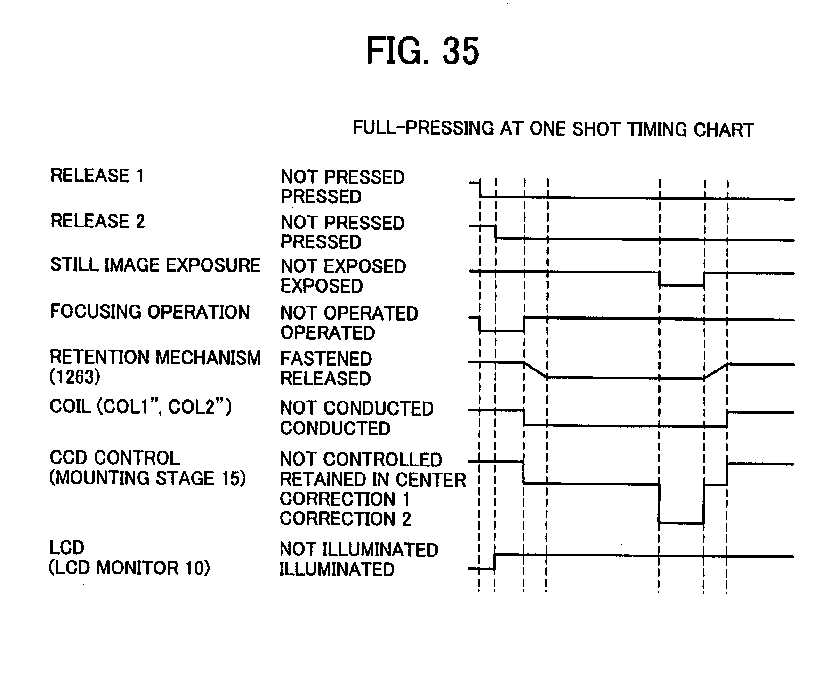

FIG.35 is a timing chart illustrating the suppression process when the release switch SW 1 is fully pressed at one shot. In this case, the full-pressing at one shot means a release operation having continuousness from the half-pressing operation (release 1) of the release switch SW1 to the full-pressing operation (release 2) of the release switch SW1, for example, a photographing operation which immediately shifts to an exposure start operation after the half-pressing. If the release switch SW1 is half-pressed, the focusing operation of the digital camera is started. The subject image is displayed on the LCD monitor 110. In addition, the full-pressing operation of the release switch SW1 is immediately performed right after the half-pressing of the release switch SW2. At the same time, the LCD monitor 110 is turned off so as not to display the subject image.

If the focusing operation is completed, the processor 104 starts the power supply to the stepping motor STM1 of the original point forced retention mechanism 1263; thereby, the mechanical retention of the mounting stage 15 is released. At the same time, the power supply to the coils COL1", COL2" is started, that is, the coils are conducted, and the mounting stage 15 is retained in the central position by the power supply control to the coils COL1", COL2". Therefore, the suppression process is performed.

If the mounting stage 15 is maintained in the central position by the power supply to the coils COL1", COL2", and the still image exposure is started, the mounting stage 15 is controlled to follow the movement of the image based on the camera shake. If the still image exposure is completed, the mounting stage 15 is returned to the central position based on the power supply control to the coils COL1", COL2". Next, the processor 104 starts the power supply to the stepping motor STM1 of the original point forced retention mechanism 1263; thereby, the mechanical fixation and retention of the mounting stage 15 are performed. Next, the power distribution to the coils COL1", COL2" is stopped.

In the case of the above-described full-pressing at one shot, it is considered that the confirmation of the composition is completed during the operation of release 1, so it is not necessary to confirm the composition during the release 2. Accordingly, it is considered that the reconfirmation of the composition is not necessary even if the mounting stage 15 is once returned to the central position during the release 2, so the suppression control process can be simplified.

Moreover, since the LCD monitor 110 is turned off during the focusing operation, battery drainage can be avoided. Furthermore, since the adsorption bars 35 (reference to FIG.9A) can be adsorbed to the magnets 16b, 16d to be retained when the mounting stage 15 is forcibly pressed to the position of the original point in a mechanical manner, the chattering of the mounting stage 15 in the Z-axis direction is controlled. In addition, the adsorption bars 35 are absorbed to the magnets 16b, 16d to be retained so that the chattering of the mounting stage 15 in the Z-axis direction is controlled even if the mounting stage 15 is not positioned at the position of the original point.

In the imaging apparatus with a function for suppressing the image blur according to the present invention, that is, a digital camera, the adsorption bars 35 are adsorbed to the permanent magnet 16c and the permanent magnet 16d, which are facing the adsorption bars 35 in the Z axis direction, so that the mounting stage 15 can be attracted to the guide stage configured to include the Y-direction stage 14 and the X-direction stage 13, that is to say, the mounting stage 15 can be attracted to the X-direction stage 13. Therefore, the position of the mounting stage 15 viewed in the Z axis direction can be set in a position so as to have contact with the guide stage (a position where the mounting stage 15 has contact with the X-direction stage 13 via the Y-direction stage 14). The chattering of the CCD solid-state image sensing device 101 (image sensor) mounted on the mounting stage 15 can be avoided in the Z axis direction (photographing optical axis direction). The CCD solid-state image sensing device 101 can receive light by a suitable focal distance.

Moreover, since the adsorption bars 35 intersect each of the coil members COL1, COL1' in the X-direction, that is to say, extend across each of the coil members COL1, COL1', the adsorption bars 35 are adsorbed to the permanent magnet 16c and the permanent magnet 16d regardless of the position of the mounting stage 15 moved on the base member 11 during the image blur suppression. Since the mounting stage 15 is moved by the magnetic force between each of the coil members COL1, COL1' and each of the coil members COL2, COL2' and each of the permanent magnets 16a-16d, the adsorption bars 35 intersecting each of the coil members COL1, COL1' are adsorbed to the permanent magnet 16c and the permanent magnet 16d regardless of the position of the mounting stage, because the permanent magnet 16c and the permanent magnet 16d can apply the magnetic force to the coil members COL1, COL1' regardless of the position of the mounting stage 15.

The adsorption bars 35 substantially cross over a center of each of the coil members COL1, COL1' in the X-direction, and the mounting stage 15 moves in the Y-direction with substantially a center of each of the coil members COL1, COL1' as a base point. Thereby, the magnetic force can be applied between the permanent magnet 16c and the permanent magnet 16d even if the mounting stage 15 moves in the Y-direction.

Since the permanent magnet 16c and the permanent magnet 16d, which are facing the adsorption bars 35, have a long shape in the Y-direction, the magnetic force can be applied even if the mounting stage 15 moves in the Y-direction.

The adsorption bars 35 cross over each of the coil members COL1, COL1', and are adsorbed to the permanent magnet 16c and the permanent magnet 16d at both sides of the CCD solid-state image sensing device 101. Therefore, the mounting stage 15 can be adsorbed to the guide stage without a bias so as to have contact with the guide stage parallel to the X-Y plane. Therefore, the chattering of the CCD solid-state image sensing device 101 in the Z axis direction perpendicular to the Z axis direction (photographing optical axis) can be avoided to suitably receive the signal of the subject image.

Moreover, although in the above-mentioned embodiments, the adsorption bars 35 are configured to cross over each of the coil members COL1, COL1', they may be configured to cross over each of the coil members COL2, COL2', and also over only the coil member COL1. That is, the present invention is not limited to the above-mentioned embodiments.

In the above-mentioned embodiments, each of the coil members COL1, COL1' and each of the coil members COL2, COL2' are provided on the mounting stage, and each of the permanent magnets 16a to 16c is provided on the X-direction stage 13 included in the guide stage. It may be, however, configured such that each of the permanent magnets 16a to 16d is provided on the mounting stage 15 and each of the coil members COL1, COL1' and each of the coil members COL2, COL2' are provided on the X-direction stage. That is, the present invention is not limited to the above-mentioned embodiments. In the case that each of the coil members COL1, COL1' and each of the coil members COL2, COL2' are provided on the X-direction stage, the adsorption bars 35 which are provided on an X-direction stage side, that is to say, provided so as to correspond to at least one of the coil members COL1, COL1' and the coil members COL2, COL2', can be adsorbed to each of the permanent magnets 16a to 16d.

In the above-mentioned embodiments, the adsorption bars 35 are provided so as to cross over each of the coil members COL1, COL1'. That is, the present invention is not limited to the above-mentioned embodiments and the adsorption bars 35 are merely required to be adsorbed to the permanent magnets (in this embodiment, the permanent magnet 16c and the permanent magnet 16d) which face the adsorption bars 35. Therefore, the adsorption bars 35 may be provided so as to be located near each of the coil members COL1, COL1' and each of the coil members COL2, COL2'.

In the above-mentioned embodiments, the gyro sensor 1214 detects a rotation of the camera in the X direction and Y direction to detect a camera shake occurring in the camera body (body case). That is, the present invention is not limited to the above-mentioned embodiments and, for example, the detection of camera shake can be performed by processing monitoring images.

In the above-mentioned embodiments, the guide stage is comprised of the Y-direction stage 14 supporting the mounting stage 15 movably in the Y-direction and the X-direction stage 13 supporting the Y-direction stage movably in the X-direction. However, the invention is not limited to the above-mentioned embodiments, and may be configured such that the mounting stage 15 is supported movably along the X-Y plane, and is fixed with respect to the photographing optical axis in the camera body.

(Third embodiment)

However, the flexible boards 200 and 200' connecting the processing circuit to the imaging device such as the CCD solid-state image sensing device 101 which is movably controlled in the imaging apparatus according to the first and second embodiments, have many folding portions to adsorb the reaction force. Therefore, the flexible board is required to be long in its entire length, and as a result, the image signal from the imaging device is easy to include noise. The shapes of the folding portions are not stabilized because of the long flexible board 200 and 200' and many folding portions in the flexible board 200 and 200', and as a result, interferences with peripheral components are easy to occur.

Under the above-mentioned circumstances, in the imaging apparatus according to the third embodiment of the present invention, the number of the folding portions is reduced and the entire length is shortened as much as possible to prevent the image signal from the imaging device such as the CCD solid-state image sensing device from including noise, and to stabilize the shapes of folding portions so that problems such as interference of the peripheral components is avoided.

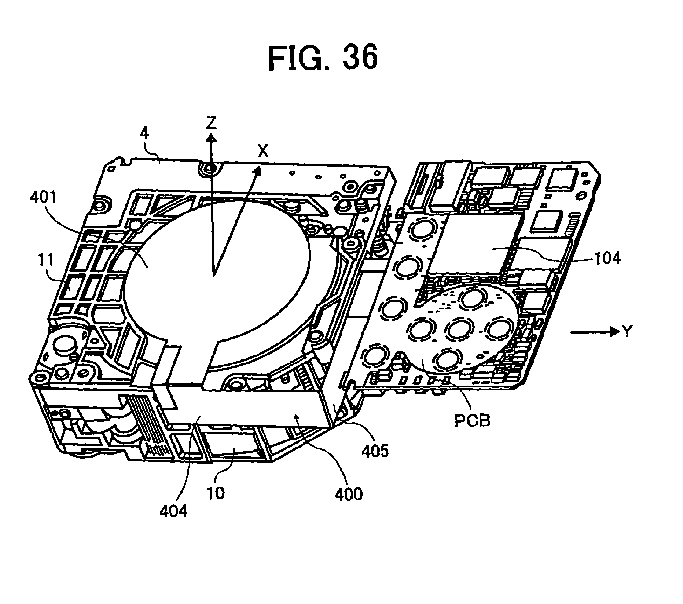

FIG.36 shows an imaging apparatus having a flexible board 400 according to the third embodiment of the present invention. The flexible board 400 according to the present embodiment includes a CCD circumferential connection portion 401, a circuit connection portion 402, and extension portions 403 to 406 as illustrated in FIGS.36 to 39.

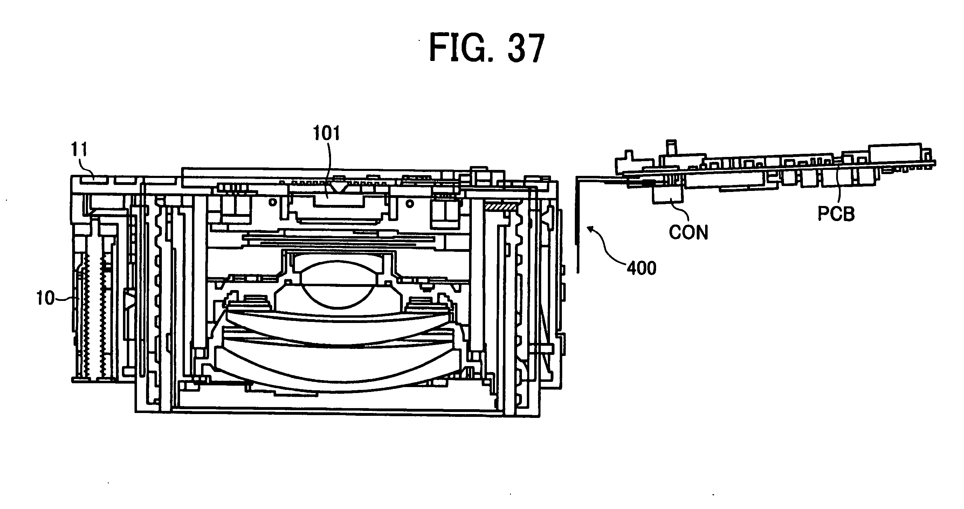

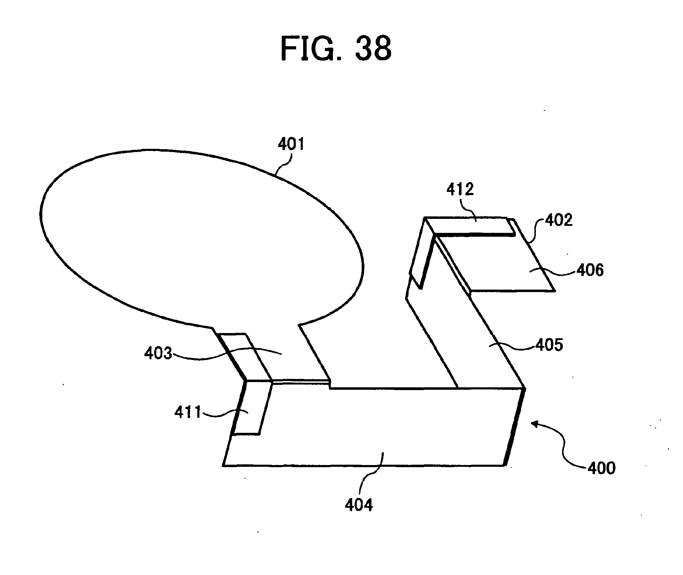

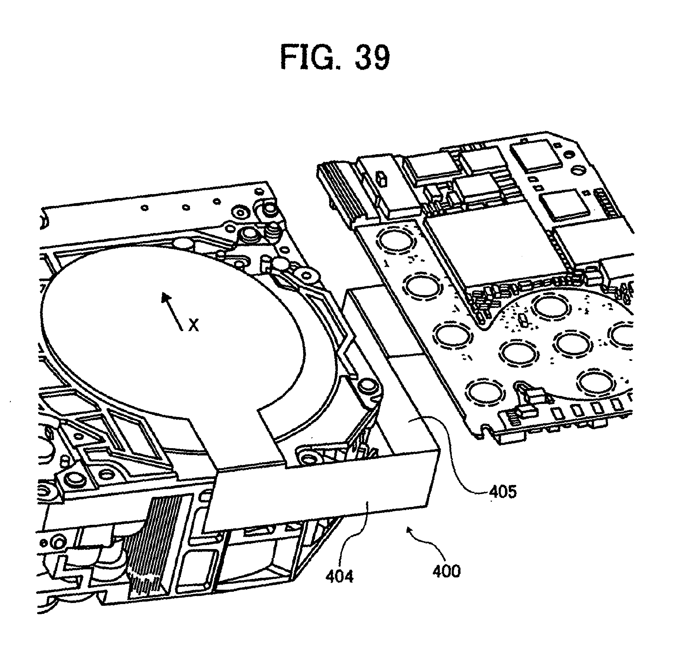

FIG.36 is a perspective view showing the fixation barrel part on which the CCD solid-state image sensing device 101 and the barrel unit 7 are mounted, the printed circuit board PCB being provided with the F/E-IC 102 and the processor 104, and the flexible board 400 connecting a part of the CCD solid-state image sensing device 101 to the printed circuit board PCB, when viewed from a side of a back surface of the fixation barrel 10. Here, an axis line extending in the optical axis direction and including the original point of the imaging device corresponds to the Z axis, and a plane orthogonal to the Z-axis corresponds to the X-Y plane. FIG.37 is a sectional view in the Y-Z plane of the FIG.36, FIG.38 is an enlarged perspective view showing a folding and turning shape of the flexible board 400, and FIG.39 is a detailed view of the substantial part illustrating in detail the configuration of turning and attaching the flexible board 400.

In the CCD circumferential connection portion 401, although it is not clearly illustrated, a connection pattern is disposed for electrically connecting the CCD solid-state image sensing device 101, each of the coil members COL, and each component of the peripheral components such as the position detection element 1252 etc., as described in the first embodiment.

The circuit connection portion 402 has a connection pattern portion connecting to the connector CON electrically connected to the F/E-IC 102, the operational amplifier 1253 and the coil driver 1254 etc. Thereby, the processing circuit of the digital camera system is electrically connected to the CCD circumferential connection portion 401 via the extension portions 403 to 406.

A receiving surface of the CCD solid-state image sensing device 101 is downward in an illustrated direction of FIG.37 and photographs the subject positioned below in this figure. The CCD solid-state image sensing device 101 is soldered with the CCD circumferential connection portion 401 of the flexible board 400. The circuit connection portion 402 of the flexible board 400 is connected to the connector CON of the printed circuit board PCB. Electrical signals output from the CCD solid-state image sensing device 101 are sent to the processor 104 mounted on the printed circuit board PCB via the connector CON. The imaging apparatus has the image blur suppression mechanism which detects an image blur occurring in the main body case having the imaging apparatus, calculates a distance of the image from an intersection point of the X-Y plane with the Z axis as a reference value (a target value), and allows the CCD solid-state image sensing device 101 to follow the movement of the subject image due to the camera shake based on the target value. As mentioned above, while following the movement, the following performance degrades if the CCD solid-state image sensing device 101 is forced by a reaction force from the flexible board 400. Therefore, the flexible board 400 is required to be configured to adsorb the reaction force.

FIG.38 shows in detail the flexible board 400. The flexible board 400 is comprised of the first extension portion 403 extending, in this case, in the X direction parallel to the X-Y plane, the second extension portion 404 continuous with the first extension portion 403 and folding at about 90 degrees in a direction directed from the CCD solid-state image sensing device 101 to the subject, extending in the Z axis direction and further extending in the Y direction illustrated in the figure, the third extension portion 405 continuous with the second extension portion 404 and folding at about 90 degrees from the second extension portion 404 and extending in the Z axis direction and in the X direction illustrated in the figure, and the fourth extension portion 406 continuous with the third extension portion 405 and folding at about 90 degrees, extending parallel to the X-Y plane and connected to the connector CON at the circuit connection portion 402 of an extension end. In this case, in a part of the folding portion folding at about 90 degrees between the first extension portion 403 and the second extension portion 404, a form retention member 411, for example, a metal plate, etc. is attached by a two-sided adhesive tape. Moreover, in a part of the folding portion folding at about 90 degrees between the third extension portion 405 and the fourth extension portion 406, a form retention member 412, for example, a metal plate, etc. is attached by a two-sided adhesive tape. The form retention member 11 allows a positional relationship between the first extension portion 403 and the second extension portion 404 by folding, for example, so that plastic deformation is maintained at about 90 degrees. Furthermore, the form retention member 12 allows a positional relationship between the third extension portion 405 and the fourth extension portion 406 by folding, for example, so that plastic deformation is maintained at about 90 degrees.

FIG.39 illustrates a state where the flexible board 400 is attached. If the CCD solid-state image sensing device 101 moves in the X direction, the second extension portion 404 is mainly deformed so that the reaction force in the X direction can be reduced. In the same way, if the CCD solid-state image sensing device 101 moves in the Y direction, the third extension portion 405 is mainly deformed so that the reaction force in the Y direction can be reduced.

The flexible board 400 configured as mentioned above allows the number of folding portions to be reduced, and the entire length of the flexible board to be shortened, make it difficult for the image signal from the CCD solid-state image sensing device 101 to include noise, and allows the shapes of the folding portions to be stabilized making it difficult for interference with the peripheral components to occur. Moreover, the reaction force occurring with the processing circuit side with respect to the movement of the imaging device in various directions on a plane parallel to an imaging surface is effectively adsorbed.

Furthermore, in a line of intersection between a plane including the second extension portion 404 and the X-Y plane and a line of intersection between a plane including the third extension portion 405 and the X-Y plane, one of the above two lines intersects in the X direction and the other line of the above two lines intersects in the Y direction. Thereby, the main reaction forces occurring with the processing circuit side with respect to the movement of the imaging device in various directions on a plane parallel to an imaging surface are more effectively adsorbed. In addition, since folding parts are folded at substantially 90 degrees, the main reaction forces occurring with the processing circuit side with respect to the movement of the imaging device in main directions on the plane parallel to an imaging surface are further more effectively adsorbed.

As a result of the existence of parts where the folding shapes are held at substantially 90 degrees in the main folding portions, the shapes of the folding portions can be stably maintained. The parts where the shapes are held is not limited to a whole range of a boundary line between the one extension portion and the other extension portion which constitute the folding portion but only a part. Thereby, the function for adsorbing the reaction forces occurring with the processing circuit side with respect to the movement of the imaging device in various directions on the plane parallel to an imaging surface can be maximized and the shapes of the folding portions can be stably maintained. By mounting each of the form retention members 411 and 412 having a portion with substantially 90 degrees at a part of each of the folding portions, the shapes of the folding portions are maintained. Since the extension portions 403 to 405, that is, the extension portions except the fourth extension portion 406, are all movably provided, the reaction forces occurring with the processing circuit side with respect to the movement of the imaging device in the X and Y directions on the plane parallel to an imaging surface are effectively adsorbed. Particularly, by effectively deforming the second extension portion 404 and the third extension portion 405 with respect to the movement of the imaging device in the X and Y directions, the main reaction forces occurring with the processing circuit side with respect to the movement of the imaging device in various directions on the plane parallel to an imaging surface are effectively adsorbed.

Moreover, if the form retention members 411 and 412 are comprised of metal materials, the form retention members 411 and 412 may provide advantages of space saving and great strength.

(Fourth embodiment)

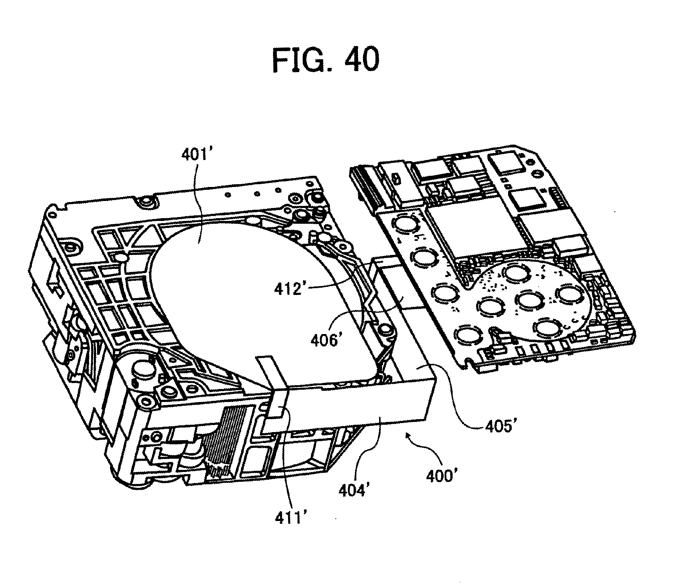

Furthermore, in the above embodiments, since the first extension portion 403 is a part extending from CCD circumferential connection portion 401 in the same plane, it may be configured such that a CCD circumferential connection portion 401' is expanded to include a part corresponding to the first extension portion 403 so as to omit the first extension portion 403, as shown in FIG.40, so that a second extension portion 404' is directly folded at 90 degrees from the CCD circumferential connection portion 401' to the subject side and extended. This corresponds to a flexible board 400' according to the fourth embodiment of the present invention.

Particularly, in the flexible board 400', the second extension portion 404' parallel to the Y-Z plane extends directly in the Z axis direction from the CCD circumferential connection portion 401', and a fourth extension portion 406' parallel to the X-Z plane via the third extension portion 405' extends in the Z axis direction, so that the reaction force is adsorbed mainly by the second extension portion 404' and the third extension portion 405'.

Moreover, this configuration may be considered as follows: the first extension portion 404' parallel to the Y-Z plane extends in the Z axis direction from the CCD circumferential connection portion 401', and the third extension portion 406' parallel to the X-Y plane continues via the second extension portion 405' parallel to the X-Z plane and extends in the X axis direction so that the reaction force is adsorbed mainly by the first extension portion 404' and the second extension portion 405'.

(Fifth embodiment)

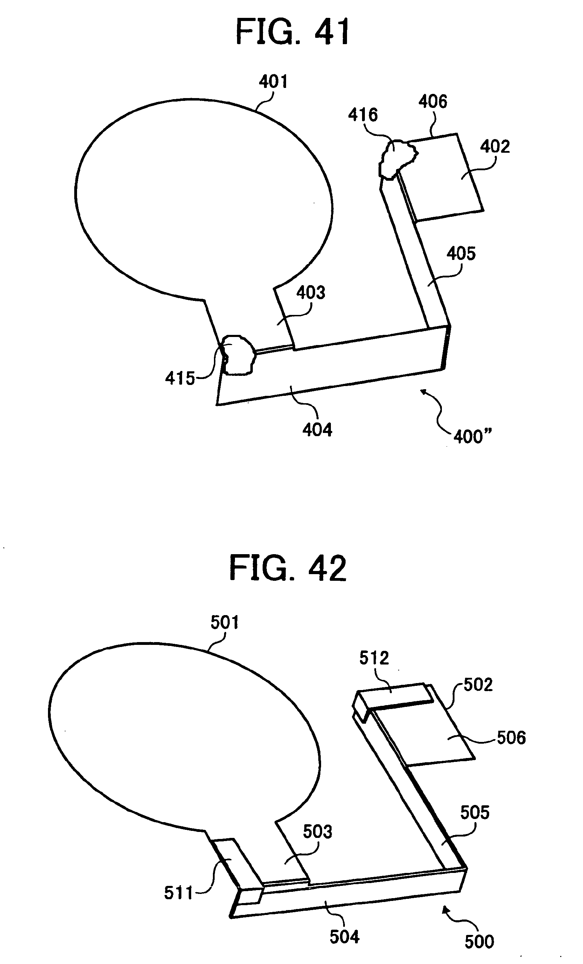

FIG.41 shows a flexible board 400" according to the fifth embodiment of the present invention. As illustrated, a form retention member may be formed with adhesives 415 and 416 which are applied to a part of the folding portion between the first extension portion 403 and the second extension portion 404 and a part of the folding portion between the third extension portion 405 and the fourth extension portion 406, respectively, and then hardened. By using the adhesives as mentioned above, the production cost is effectively reduced and the form retention in a small space is easily achieved.

(Sixth embodiment)

FIG.42 shows a flexible board according to the sixth embodiment of the present invention.

A flexible board 500 is comprised of a first extension portion 503 extending, in this case, in the X direction parallel to the X-Y plane, a second extension portion 504 continuous with the first extension portion 503 and folding at about 90 degrees in a direction directed from the CCD solid-state image sensing device 101 to the subject, extending in the Z axis direction and further extending in the Y direction, a third extension portion 505 continuous with the second extension portion 504 and folding at about 90 degrees from the second extension portion 504 and extending in the Z axis direction and in the X direction, and a fourth extension portion 506 continuous with the third extension portion 505 and folding at about 90 degrees, extending parallel to the X-Y plane and connected to the connector CON at the circuit connection portion 502 of an extension end. In this case, the second extension portion 504 and the third extension portion 505 are folded in half in the width direction along fold lines parallel to the Y direction and the X direction, respectively to form the extension portions 504 and 505, which have narrow widths with respect to the number of wirings for saving space.

Moreover, in a part of the folding portion folding at about 90 degrees between the first extension portion 503 and the second extension portion 504, a form retention member 511, for example, a metal plate, etc. is attached by a two-sided adhesive tape. In addition, a form retention member 512 is attached by a two-sided adhesive tape to a part of the folding portion at about 90 degrees between the third extension portion 505 and the fourth extension portion 506.

The embodiments of the invention enable an imaging apparatus and an electronic device having the imaging apparatus to improve control performance, so that a variation of the mounting position between the two units connected by the flexible board does not bring about a change in performance before and after mounting.

The embodiments of the invention effectively absorb a reactive force produced between the processing circuit and the image sensor that moves in all directions on a plane parallel to the imaging surface. This achieves an appropriate image blur suppression.

On the other hand, when the flexible board is designed to absorb a reactive force, the flexible board itself has many bending portions and should be long in length. This contributes to an unstable shape of the bending portions and tends to receive noise on an image signal from the image sensor, which may interfere with the parts located nearby.

Accordingly, the embodiments of the invention reduce the number of bending portions of the flexible board and shorten the entire length of the flexible board. This stabilizes a shape of the bending portions and prevents noise from being added to an image signal from the image sensor to suppress interference with the parts located nearby.

While preferred embodiments of the invention have been described and illustrated above, it should be understood that these are exemplary of the invention and are not to be considered as limiting. Additions, omissions, substitutions, and other modifications can be made without departing from the scope of the present invention. Accordingly, the invention is not to be considered as being limited by the foregoing description, and is only limited by the scope of the appended claims.

**Claims**

1.  An imaging apparatus comprising:

    an image sensor (101) movably mounted with the imaging apparatus for forming a subject image;
    a process circuit for processing signals from the image sensor (101); and
    a flexible board (400, 400') having an extension connector (403-406, 404'-406') for connecting the image sensor (101) and the process circuit, the extension connector having one end in an image sensor direction and the other end in a processor direction on an X-Y plane of the flexible board (400, 400'), where the X-Y plane is designated as a plane orthogonal to a Z axis direction of an optical axis, including:

    a second extension (404, 404') continuous with the one end and extending in the Z axis direction;
    a third extension (405, 405') continuous with and orthogonal to the second extension (404, 404'), and extending in a direction not parallel to the X-Y plane; and
    a fourth extension (406, 406') continuous with the third extension (405, 405') and extending parallel to the X-Y plane to be continuous with the other end at an end thereof.

2.  An imaging apparatus as recited in claim 1, further comprising:
    a first extension (403) extending from the one end on the X-Y plane; wherein the second extension (404) is continuous with the first extension (403).

3. An imaging apparatus as recited in claim 2, further comprising a first boundary between the first extension and the second extension, a second boundary between the second extension and the third extension, a third boundary between the third extension and the fourth extension; and a first intersection line formed by a first plane containing the second extension and the X-Y plane containing an X axis and a Y axis, and a second intersection line formed by a second plane containing the third extension and the X-Y plane,
wherein the first to third boundaries undergo plastic deformation, and one of the intersection lines intersects the X axis and the other intersects the Y axis.

4. An imaging apparatus as recited in claim 1, further comprising a first boundary between the one end of the flexible board and the second extension, a second boundary between the second extension and the third extension, and a third boundary between the third extension and the fourth extension; and a first intersection line formed by a first plane containing the second extension and the X-Y plane containing an X axis and a Y axis, and a second intersection line formed by a second plane containing the third extension and the X-Y plane,
wherein one of the first to third boundaries undergo plastic deformation, and one of the intersection lines intersects the X axis and the other intersects the Y axis.

5. An imaging apparatus as recited in any one of claims 1-4, wherein the second extension is bent at an angle of approximately 90 degrees with respect to the one end of the flexible board or the first extension, the third extension is bent at approximately an angle of 90 degrees with respect to the second extension, and the fourth extension is bent at an angle of approximately 90 degrees with respect to the third extension, and wherein one of the second and third extensions is placed substantially parallel to the X-Z plane and the other is placed substantially parallel to the Y-Z plane.

6. An imaging apparatus as recited in claim 5, further comprising a first bent section formed between the one end of the flexible board or the first extension and the second extension, and a second bent section formed between the third extension and the fourth extension,
wherein at least one of the first bent section and second bent section includes a portion that is constrained by a bent configuration of approximately a 90 degree angle.

7. An imaging apparatus as recited in claim 6, wherein the constrained portion crosses a part of a boundary formed by the two extensions that constitute the bent section.

8. An imaging apparatus as recited in claim 7, further comprising a form holding member provided with the bent section across the part, the form holding member including a segment formed at an angle of approximately 90 degrees.

9. An imaging apparatus as recited in claim 8, wherein the form holding member is made of a metal.

10. An imaging apparatus as recited in claim 7, wherein the bent sections are maintained at an angle of approximately 90 degrees by an adhesive that is applied across the bent sections and hardened.

11. An imaging apparatus as recited in any one of claims 1-10 , wherein the first and third extensions or the second and third extensions are moved by a bending of the extension connector as the image sensor moves, and the fourth extension is at least partly fixed by a fixing member that is integrally supported with the imaging apparatus, so that a movement of the fourth extension is constrained.

12. An imaging apparatus as recited in any one of claims 1-10, wherein mainly the second extension deforms when the image sensor is moved in one of the X direction and the Y direction, and mainly the third extension deforms when the image sensor is moved in the other of the X direction and the Y direction.

13. An imaging apparatus as recited in any one of claims 1-12, wherein the imaging apparatus includes an image blur suppression mechanism that detects an image blur produced therein, calculates as a reference value the amount of movement of an image from an intersection of the X-Y plane and the Z axis, based on the detected image blur, and makes the image sensor follow the movement of an image of a subject causing the image blur, based on the reference value.

14. An imaging apparatus as recited in any one of claims 1-13, wherein the image blur suppression mechanism includes a mounting stage that mounts the image sensor, and moves the image sensor in the X-Y plane by moving the mounting stage along the X-Y plane.

**15.** An electronic device comprising an imaging apparatus as recited in any one of claims 1-14.


**Patentansprüche**

**1.** Abbildungsvorrichtung, umfassend:

einen Bildsensor (101) zum Ausbilden eines Subjektbilds, der beweglich an der Abbildungsvorrichtung befestigt ist;
einen Verarbeitungsschaltkreis zum Verarbeiten von Signalen von dem Bildsensor (101); und
eine flexible Platte (400, 400'), die einen Erweiterungsanschluss (403 - 406, 404' - 406') zum Anschließen des Bildsensors (101) und des Verarbeitungsschaltkreises aufweist, wobei der Erweiterungsanschluss ein Ende in Bildsensorrichtung und das andere Ende in Prozessorrichtung in einer X-Y-Ebene der flexiblen Platte (400, 400') aufweist, wobei die X-Y-Ebene als Ebene senkrecht zu einer Z-Achsenrichtung einer optischen Achse bestimmt ist, wobei die flexible Platte (400, 400') Folgendes beinhaltet:

eine zweite Erweiterung (404, 404'), die fortlaufend mit dem einen Ende ist und sich in Z-Achsenrichtung erstreckt;
eine dritte Erweiterung (405, 405'), die fortlaufend und senkrecht mit der zweiten Erweiterung (404, 404') ist und sich in eine Richtung erstreckt, die nicht parallel zur X-Y-Ebene ist; und
eine vierte Erweiterung (406, 406'), die fortlaufend mit der dritten Erweiterung (405, 405') ist und sich parallel zur X-Y-Ebene erstreckt, um mit dem anderen Ende an einem anderen Ende davon fortlaufend zu sein.

**2.** Abbildungsvorrichtung nach Anspruch 1, ferner umfassend:

eine erste Erweiterung (403), die sich von dem einen Ende in der X-Y-Ebene erstreckt; wobei die zweite Erweiterung (404) mit der ersten Erweiterung (403) fortlaufend ist.

**3.** Abbildungsvorrichtung nach Anspruch 2, ferner umfassend eine erste Grenze zwischen der ersten Erweiterung und der zweiten Erweiterung, eine zweite Grenze zwischen der zweiten Erweiterung und der dritten Erweiterung, eine dritte Grenze zwischen der dritten Erweiterung und der vierten Erweiterung; und eine erste Schnittgerade, die von einer ersten, die zweite Erweiterung beinhaltenden Ebene und der die X-Achse und die Y-Achse beinhaltenden X-Y-Ebene gebildet wird, und eine zweite Schnittgerade, die von einer die dritte Erweiterung beinhaltenden zweiten Ebene und der X-Y-Ebene gebildet wird, wobei die erste bis dritte Grenze plastischer Deformation unterliegen, und eine der Schnittgeraden die X-Achse schneidet und die andere die Y-Achse schneidet.

**4.** Abbildungsvorrichtung nach Anspruch 1, ferner umfassend eine erste Grenze zwischen dem einen Ende der flexiblen Platte und der zweiten Erweiterung, eine zweite Grenze zwischen der zweiten Erweiterung und der dritten Erweiterung und eine dritte Grenze zwischen der dritten Erweiterung und der vierten Erweiterung; und eine erste Schnittgerade, die von einer ersten, die zweite Erweiterung beinhaltenden Ebene und der die X-Achse und die Y-Achse beinhaltenden X-Y-Ebene gebildet wird, und eine zweite Schnittgerade, die von einer zweiten, die dritte Erweiterung und die X-Y-Ebene beinhaltenden Ebene gebildet wird, wobei eine der ersten bis dritten Grenzen plastischer Deformation unterliegt und eine der Schnittgeraden die X-Achse und die andere die Y-Achse schneidet.

**5.** Abbildungsvorrichtung nach irgendeinem der Ansprüche 1 - 4, bei der die zweite Erweiterung um einen Winkel von ungefähr 90 Grad bezüglich dem einen Ende der flexiblen Platte oder der ersten Erweiterung gebogen ist, die dritte Erweiterung mit ungefähr einem Winkel von 90 Grad bezüglich der zweiten Erweiterung gebogen ist und die vierte Erweiterung mit ungefähr einem Winkel von 90 Grad bezüglich der dritten Erweiterung gebogen ist und bei der eine der zweiten und dritten Erweiterung im Wesentlichen parallel zur X-Z-Ebene platziert ist und die andere im Wesentlichen parallel zur Y-Z-Ebene platziert ist.

**6.** Abbildungsvorrichtung nach Anspruch 5, ferner umfassend einen ersten gebogenen Abschnitt, der zwischen dem einen Ende der flexiblen Platte und der ersten Erweiterung und der zweiten Erweiterung gebildet ist, und einen zweiten gebogenen Abschnitt, der zwischen der dritten Erweiterung und der vierten Erweiterung gebildet ist, wobei wenigstens eines aus erstem gebogenen Abschnitt und zweitem gebogenen Abschnitt einen Teilbereich beinhaltet, der durch eine gebogene Konfiguration eines ungefähren 90-Grad-Winkels beschränkt ist.

7. Abbildungsvorrichtung nach Anspruch 6, bei der der beschränkte Abschnitt einen Teil der Grenze kreuzt, die von den zwei den gebogenen Abschnitt bildenden Erweiterungen gebildet wird.

8. Abbildungsvorrichtung nach Anspruch 7, ferner umfassend ein Formhalteglied, das mit einem gebogenen Abschnitt quer über dem Teil ausgestattet ist, wobei das Formhalteglied ein Segment beinhaltet, das mit einem Winkel von ungefähr 90 Grad gebildet ist.

9. Abbildungsvorrichtung nach Anspruch 8, bei der das Formhalteglied aus Metall ist.

10. Abbildungsvorrichtung nach Anspruch 7, bei der die gebogenen Abschnitte mit einem Winkel von ungefähr 90 Grad mit einem Klebstoff festgehalten werden, der über die gebogenen Abschnitte hinweg aufgebracht und ausgehärtet worden ist.

11. Abbildungsvorrichtung nach irgendeinem der Ansprüche 1 - 10, bei der die erste und zweite Erweiterung oder die zweite und dritte Erweiterung durch ein Verbiegen des Erweiterungsanschlusses bewegt werden, während der Bildsensor sich bewegt, und bei der die vierte Erweiterung wenigstens teilweise von einem Fixierglied festgehalten wird, das integral an der Abbildungsvorrichtung gestützt ist, so dass eine Bewegung der vierten Erweiterung beschränkt wird.

12. Abbildungsvorrichtung nach irgendeinem der Ansprüche 1 - 10, bei der sich hauptsächlich die zweite Erweiterung sich deformiert, wenn der Bildsensor in eine aus X-Richtung und Y-Richtung bewegt wird, und sich hauptsächlich die dritte Erweiterung sich deformiert, wenn der Bildsensor in die andere aus X-Richtung und Y-Richtung bewegt wird.

13. Abbildungsvorrichtung nach irgendeinem der Ansprüche 1 -12, bei der die Abbildungsvorrichtung einen Bildverschwommenheitsunterdrückungsmechanismus beinhaltet, der eine Bildverschwommenheit detektiert, die in der Abbildungsvorrichtung produziert wurde, einen Betrag der Bewegung eines Bildes von einem Schnitt der X-Y-Ebene mit der Z-Achse als einen Referenzwert basierend auf der Bildverschwommenheit berechnet und den Bildsensor veranlasst, der Bewegung eines Subjektbildes, die die Bildverschwommenheit verursacht, basierend auf dem Referenzwert zu folgen.

14. Abbildungsvorrichtung nach irgendeinem der Ansprüche 1 -13, bei der der Bildverschwommenheitsunterdrückungsmechanismus eine Einrichtungsstufe beinhaltet, die den Bildsensor einrichtet und den Bildsensor in der X-Y-Ebene bewegt, indem die Einrichtungsstufe entlang der X-Y-Ebene bewegt wird.

15. Ein elektronisches Gerät umfassend eine Abbildungsvorrichtung nach irgendeinem der Ansprüche 1 -14.

**Revendications**

1. Appareil de formation d'image comprenant :

un capteur d'image (101) monté mobile sur l'appareil de formation d'imagerie servant à former une image-sujet ;
un circuit de traitement servant à traiter des signaux provenant du capteur d'image (101) ; et
une carte flexible (400, 400') comportant un connecteur d'extension (403-406, 404'-406') servant à connecter le capteur d'image (101) et le circuit de traitement, le connecteur d'extension possédant une première extrémité dans une direction de capteur d'image et l'autre extrémité dans une direction de processeur sur un plan X-Y de la carte flexible (400, 400'), où le plan X-Y est désigné comme un plan orthogonal à une direction d'axe Z d'un axe optique, comprenant :

une deuxième extension (404, 404') continue à la première extrémité et s'étendant dans la direction d'axe Z ;
une troisième extension (405, 405') continue et orthogonale à la deuxième extension (404, 404'), et s'étendant dans une direction non parallèle au plan X-Y ; et
une quatrième extension (406, 406') continue à la troisième extension (405, 405') et s'étendant parallèlement au plan X-Y pour être continue à l'autre extrémité au niveau d'une extrémité de celle-ci.

2. Appareil de formation d'image selon la revendication 1, comprenant en outre :

une première extension (403) s'étendant de la première extrémité sur le plan X-Y ; dans lequel la seconde extension (404) est continue à la première extension (403).

**3.** Appareil de formation d'image selon la revendication 2, comprenant en outre une première limite entre la première extension et la deuxième extension, une deuxième limite entre la deuxième extension et la troisième extension, une troisième limite entre la troisième extension et la quatrième extension ; et une première ligne d'intersection formée par un premier plan contenant la deuxième extension et le plan X-Y contenant un axe X et un axe Y, et une seconde ligne d'intersection formée par un second plan contenant la troisième extension et le plan X-Y, dans lequel les première à troisième limites subissent une déformation plastique, et l'une des lignes d'intersection coupe l'axe X et l'autre coupe l'axe Y.

**4.** Appareil de formation d'image selon la revendication 1, comprenant en outre une première limite entre la première extrémité de la carte flexible et la deuxième extension, une deuxième limite entre la deuxième extension et la troisième extension, et une troisième limite entre la troisième extension et la quatrième extension ; et une première ligne d'intersection formée par un premier plan contenant la deuxième extension et le plan X-Y contenant un axe X et un axe Y, et une seconde ligne d'intersection formée par un second plan contenant la troisième extension et le plan X-Y, dans lequel l'une des première à troisième limites subissent une déformation plastique, et l'une des lignes d'intersection coupe l'axe X et l'autre coupe l'axe Y.

**5.** Appareil de formation d'image selon l'une quelconque des revendications 1 à 4, dans lequel la deuxième extension est courbée selon un angle d'approximativement 90 degrés par rapport à la première extrémité de la carte flexible ou la première extension, la troisième extension est courbée selon un angle d'approximativement 90 degrés par rapport à la deuxième extension, et la quatrième extension est courbée selon un angle d'approximativement 90 degrés par rapport à la troisième extension, et dans lequel l'une des deuxième et troisième extensions est placée sensiblement parallèlement au plan X-Z et l'autre est placée sensiblement parallèlement au plan Y-Z

**6.** Appareil de formation d'image selon la revendication 5, comprenant en outre une première section courbée formée entre la première extrémité de ia carte flexible ou la première extension et la deuxième extension, et une seconde section courbée formée entre la troisième extension et !a quatrième extension, dans lequel au moins une section parmi la première section courbée et la seconde section courbée comprend une partie qui est contrainte par une configuration courbée d'un angle d'approximativement 90 degrés.

**7.** Appareil de formation d'image selon la revendication 6, dans lequel la partie contrainte croise une partie d'une limite formée par les deux extensions qui constituent la section courbée.

**8.** Appareil de formation d'image selon la revendication 7, comprenant en outre un élément de maintien de forme pourvu de la section courbée sur la partie, l'élément de maintien de forme comprenant un segment formé d'un angle d'approximativement 90 degrés.

**9.** Appareil de formation d'image selon la revendication 8, dans lequel l'élément de maintien de forme se compose d'un métal.

**10.** Appareil de formation d'image selon la revendication 7, dans lequel les sections courbées sont maintenues selon un angle d'approximativement 90 degrés par un adhésif qui est appliqué sur toutes les sections courbées et durci.

**11.** Appareil de formation d'image selon l'une quelconque des revendications 1 à 10, dans lequel les première et troisième extensions ou les deuxième et troisième extensions sont déplacées par une courbure du connecteur d'extension lorsque le capteur d'image se déplace, et la quatrième extension est au moins partiellement fixée par un élément de fixation qui est soutenu d'un seul bloc avec appareil de formation d'image, de sorte qu'un déplacement de la quatrième extension est contraint.

**12.** Appareil de formation d'image selon l'une quelconque des revendications 1 à 10, dans lequel la deuxième extension principalement se déforme lorsque le capteur d'image se déplace dans la direction X ou la direction Y, et la troisième extension principalement se déforme lorsque le capteur d'image se déplace dans l'autre des directions X et Y.

**13.** Appareil de formation d'image selon l'une quelconque des revendications 1 à 12, dans lequel l'appareil de formation d'image comprend un mécanisme de suppression de flou d'image qui détecte un flou d'image produit, calcule en tant que valeur de référence le degré de déplacement d'une image depuis une intersection du plan X-Y et de l'axe Z, sur la base du flou d'image détecté, et amène le capteur d'image à suivre le déplacement d'une image d'un sujet provoquant le flou d'image, sur la base de la valeur de référence.

**14.** Appareil de formation d'image selon l'une quelconque des revendications 1 à 13, dans lequel le mécanisme de suppression de flou d'image comprend un étage de montage sur lequel est monté le capteur d'image, et déplace le capteur d'image dans le plan X-Y en déplaçant l'étage de montage le long du plan X-Y.

**15.** Dispositif électronique comprenant un appareil de formation d'image selon l'une quelconque des revendications 1 à 14.

# FIG. 1

SW1 SW2 3 5

2

4

6

7

# FIG. 2

4 SW2 SW3 SW1

SW4

8 9 SW5

SW7

110 SW6

SW11 SW8

SW13

SW12 SW10 SW9 SW14

# FIG. 3

SW1 SW2

1

# FIG. 4A

| FIG.4 | | |
|---|---|---|
| FIG.4A | FIG.4B | FIG.4C |

LENS BARREL UNIT 7

| ZOOM OPTICAL SYSTEM 71 | FOCUS OPTICAL SYSTEM 72 | APERTURE STOP UNIT 73 | MECHANICAL SHUTTER UNIT 74 |
|---|---|---|---|

| ZOOM LENS 71a | FOCUS LENS 72a | APERTURE STOP 73a | MECHANICAL SHUTTER 74a |
|---|---|---|---|

1263

RETENTION

1251

101 — CCD

CCD STAGE

| ZOOM MOTOR | FOCUS MOTOR | APERTURE STOP MOTOR | MECHANICAL SHUTTER MOTOR |
|---|---|---|---|

71b  72b  73b  74b

1255

ACTUATOR

75

MOTOR DRIVER

1153  1152  1151

| MICROPHONE | MICROPHONE AMP | SOUND RECORDING CIRCUIT |
|---|---|---|

1163  1162  1161

| SPEAKER | AUDIO AMP | SOUND REPRODUCING CIRCUIT |
|---|---|---|

# FIG. 4B

# FIG. 4C

# FIG. 5

GENERAL OPERATION OF DIGITAL CAMERA

```
              ( START )
                  |
                  v
         S1      REPRODUCING
    PHOTOGRAPHING   MODE
        MODE  ─────────────────────────────┐
          |                                 |
    PHOTOGRAPHING                           |
        MODE                                |
          v                                 v
  S2  ┌─────────────┐              ┌──────────────────┐  S5
      │ MONITORING  │              │    REPRODUCE     │
      │  PROCESS    │              │ PHOTOGRAPHED IMAGE│
      └─────────────┘              └──────────────────┘
          |                                 |
          v        S3                       v        S6
  YES   MODE CHANGE?              MODE CHANGE?        NO
 <─────                                              ────>
          |                                 |
         NO                                YES
          v
  S4  ┌─────────────┐
      │  PHOTOGRAPH │
      └─────────────┘
```

# FIG. 6A

θ

LENS

CCD PLANE

# FIG. 6B

θ

LENS

FOCAL LENGTH

P2

X DIRECTION
MOVEMENT

θy

θx

y

O'

x

O    dx    dy

P1

Y DIRECTION MOVEMENT

CCD
PLANE

# FIG. 7

# FIG. 8

# FIG. 9A

# FIG. 9B

# FIG. 10

# FIG. 11

# FIG. 12A

# FIG. 12B

# FIG. 13A

# FIG. 13B

## FIG. 13C

## FIG. 13D

## FIG. 13E

# FIG. 14A

# FIG. 14B

# FIG. 15

# FIG. 16

# FIG. 17

# FIG. 18

# FIG. 19

# FIG. 20

# FIG. 21

# FIG. 22

# FIG. 23

# FIG. 24

201'

210', 209'
211', 210'
209', 208'
200'

# FIG. 25

IN1 □ 1

IN2 □ 1

ENA □ 1

MD3

M

40a'
40a
R18
C7

R19
C8

40b'
40b

STMC'

STM1

STMC"

# FIG. 26

**◎RESET**

53 msec

| ROTATION DIRECTION | 200PPS |
|---|---|
| CCW | 2 PULSES |

↓

| ROTATION DIRECTION | 1000PPS |
|---|---|
| CCW | 33 PULSES |

↓

| ROTATION DIRECTION | 200PPS |
|---|---|
| CW | 2 PULSES |

S11

**◎RELEASE**

43 msec

| ROTATION DIRECTION | 200PPS |
|---|---|
| CW | 2 PULSES |

↓

| ROTATION DIRECTION | 1000PPS |
|---|---|
| CW | 28 PULSES |

| HOLD | 5msec |
|---|---|

S12

**◎RETENTION**

18 msec

| ROTATION DIRECTION | 200PPS |
|---|---|
| CW | 2 PULSES |

↓

| ROTATION DIRECTION | 1000PPS |
|---|---|
| CW | 3 PULSES |

| HOLD | 5msec |
|---|---|

S13

# FIG. 27

# FIG. 28

# FIG. 29

```
┌─────────────────────────────┐
│  SUPPRESSION CONTROL        │─S21
│  INITIAL SETTING            │
└─────────────────────────────┘
              │
              ▼
┌─────────────────────────────┐
│      SET Vr1', Vr2'         │─S22
└─────────────────────────────┘
              │
              ▼
┌─────────────────────────────┐
│      COMPLETE SETTING       │─S23
└─────────────────────────────┘
```

# FIG. 30

```
        ┌─────────────────┐
        │  START CONTROL  │
        └─────────────────┘
                │
                ▼
┌─────────────────────────────┐
│       READ CONTROL          │─S31
│    REFERENCE VALUE A        │
└─────────────────────────────┘
                │
                ▼
┌─────────────────────────────┐
│     READ POSITION DATA B    │─S32
└─────────────────────────────┘
                │
                ▼
┌─────────────────────────────┐
│  COMPARE REFERENCE VALUE    │─S33
│  AND POSITION DATA C=B-A    │
└─────────────────────────────┘
                │
                ▼
┌─────────────────────────────┐
│  SET Vdac1, Vdac2 OF IC1    │─S34
│  OUTPUT VOLTAGE FROM C      │
└─────────────────────────────┘
                │
                ▼         S35
          ╱─────────────╲      NO
         ╱   COMPLETE     ╲──────────
         ╲   CONTROL?     ╱
          ╲─────────────╱
                │ YES
                ▼
        ┌─────────────────┐
        │ COMPLETE FUNCTION│─S36
        └─────────────────┘
```

# FIG. 31

# FIG. 32

IMAGE BLUR SUPPRESSION BUTTON ON — S41

GYRO SENSOR POWER ON — S42

PRESS RELEASE 1/ COMPLETE RELEASE 1 PROCESS — S43

RELEASE CCD STAGE; START CCD CENTRAL RETENTION CONTROL — S44

CamShake_Start Monitoring() — S45

CONTINUE RELEASE 1? — S46
NO
YES

PRESS RELEASE 2? — S47
NO
YES

START FOLLOWING OF CCD — S48

EXPOSURE — S49

COMPLETE EXPOSURE — S50

COMPLETE FOLLOWING OF CCD; START CCD CENTERING — S51

COMPLETE CENTERING? — S52
NO
YES

DOCKING CCD STAGE — S53

# FIG. 33

FULL PRESSING TIMING CHART

| | |
|---|---|
| RELEASE 1 | NOT PRESSED / PRESSED |
| RELEASE 2 | NOT PRESSED / PRESSED |
| STILL IMAGE EXPOSURE | NOT EXPOSED / EXPOSED |
| FOCUSING OPERATION | NOT OPERATED / OPERATED |
| RETENTION MECHANISM (1263) | FASTENED / RELEASED |
| COIL (COL1", COL2") | NOT CONDUCTED / CONDUCTED |
| CCD CONTROL (MOUNTING STAGE 15) | NOT CONTROLLED / RETAINED IN CENTER / CORRECTION 1 / CORRECTION 2 |
| LCD (LCD MONITOR 10) | NOT ILLUMINATED / ILLUMINATED |

EP 1 833 242 B1

# FIG. 34

RELEASE 1 RELEASING PROCESS TIMING CHART

| | |
|---|---|
| RELEASE 1 | NOT PRESSED<br>PRESSED |
| FOCUSING OPERATION | NOT OPERATED<br>OPERATED |
| RETENTION MECHANISM<br>(1263) | FASTENED<br>RELEASED |
| COIL (COL1", COL2") | NOT CONDUCTED<br>CONDUCTED |
| CCD CONTROL<br>(MOUNTING STAGE 15) | NOT CONTROLLED<br>RETAINED IN CENTER<br>CORRECTION 1<br>CORRECTION 2 |

EP 1 833 242 B1

# FIG. 35

FULL-PRESSING AT ONE SHOT TIMING CHART

| | |
|---|---|
| RELEASE 1 | NOT PRESSED / PRESSED |
| RELEASE 2 | NOT PRESSED / PRESSED |
| STILL IMAGE EXPOSURE | NOT EXPOSED / EXPOSED |
| FOCUSING OPERATION | NOT OPERATED / OPERATED |
| RETENTION MECHANISM (1263) | FASTENED / RELEASED |
| COIL (COL1", COL2") | NOT CONDUCTED / CONDUCTED |
| CCD CONTROL (MOUNTING STAGE 15) | NOT CONTROLLED / RETAINED IN CENTER / CORRECTION 1 / CORRECTION 2 |
| LCD (LCD MONITOR 10) | NOT ILLUMINATED / ILLUMINATED |

EP 1 833 242 B1

# FIG. 36

FIG. 37

# FIG. 38

EP 1 833 242 B1

FIG. 39

405

404    400

66

# FIG. 40

# FIG. 41

# FIG. 42

**EP 1 833 242 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006060346 A
- JP 2006245080 A
- JP 2004274242 A
- EP 1791350 A2